# EUROPEAN PATENT APPLICATION

(11) **EP 2 637 330 A1**
(43) Date of publication of application: **11.09.2013**
(21) Application number: 11838079.9
(22) Date of filing: 02.11.2011
(51) Int. Cl.: H04J 11/00, H04J 1/00, H04W 4/08, H04W 28/18, H04W 72/04

(54) **COMMUNICATION SYSTEM**

(30) Priority: 02.11.2010 JP 2010246568
(71) Applicant: Panasonic Corporation, Osaka 571-8501 (JP)
(72) Inventor: TAKEDA, Teruhito, 2-1-61 Shiromi, Chuo-ku, Osaka 540-6207 (JP)
(74) Representative: Müller-Boré & Partner Patentanwälte
(86) International application number: PCT/JP2011/075350
(87) International publication number: WO 2012/060429

(57) **Abstract**

The communication system includes plural receiving nodes and a sending node. The sending node includes a sending unit, a node grouping unit, and a subcarrier selection unit. The sending unit is configured to send simultaneous broadcast data to the plural receiving nodes by use of at least one of the subcarriers. The node grouping unit is configured to refer to stored transmission path condition information, and classify the plural receiving nodes into plural destination groups based on a classification criterion related to the condition of the transmission path, and creates a destination group set. The subcarrier selection unit is configured to refer to the transmission path condition information, and select, from the plural subcarriers, a subcarrier for sending the simultaneous broadcast data to the receiving node belonging to the destination group, for each of the destination groups of the destination group set. The sending unit is configured to send the simultaneous broadcast data to each of the plural destination groups of the destination group set in turn by use of the subcarrier selected by the subcarrier selection unit.

## Description

### Technical Field

The present invention relates to communication systems and particularly to a communication system performing communication based on a multicarrier modulation method using multiple subcarriers.

### Background Art

In the past, there has been proposed a communication system in which plural communication devices communicate with each other based on a multicarrier modulation method using multiple subcarriers.

Recently, progress in communication techniques promotes networking in various technical fields. For example, various devices installed in a construction such as an apartment block (e.g., a condominium), large facilities (e.g., an amusement park), and a large building with many tenants or conference rooms are being connected to a network (communication network). In such a network, an application for simultaneously delivering data such as audio data and image data (e.g., a still image and a video) to plural users is used. Especially, for example, in the case of video delivery dealing with a large volume of data and a large condominium having many subscribers, effective use of network resources is very important.

Hence, with regard to a communication system enabling plural nodes to communicate with each other by use of a multicarrier modulation method using plural subcarriers, since a subcarrier defines a minimum unit of a communication medium, efficient use of subcarriers is necessary to achieve high-speed communication. In view of this, there have been proposed techniques disclosed in document 1 (JP 2006-504372 A) and document 2 (US 6442129 B1) for efficiently using subcarriers.

According to document 1, optimal combination of a modulation method and a data rate is selected for each subcarrier based on subcarrier estimation.

According to document 2, available modulation methods are selected based on deterioration information (e.g., a symbol noise and a carrier noise) of packets, and a modulation method to be used is determined with reference to thresholds respectively allocated to the modulation methods. Basically, the modulation method enabling the highest communication rate is selected from the modulation methods fulfilling a predetermined condition. However, when no modulation method fulfills the predetermined condition, the modulation method enabling high robustness is selected.

The prior communication system using the multicarrier modulation method as disclosed in documents 1 and 2 aims to improve efficiency of one-to-one unicast communication, but is not suitable for a configuration for simultaneous broadcast (e.g., broadcast and multicast) of the same data to plural nodes. In brief, in a situation where the same data is simultaneously broadcast to the plural nodes, it is difficult to use subcarriers efficiently.

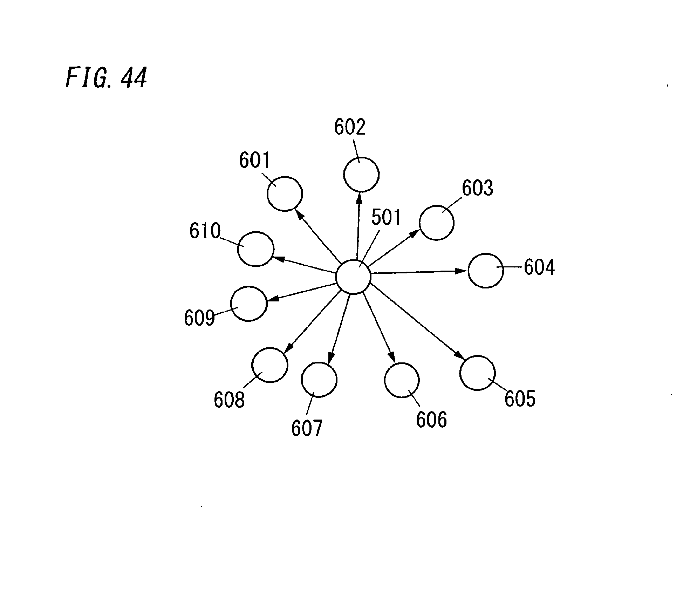

For example, as shown in FIG. 44, there has been proposed a communication system constituted by a single sending node **501** and ten receiving nodes **601** to **610.** The sending node 501 performs multicarrier communication of sending data to the ten receiving nodes **601** to **610** by use of twenty subcarriers **f1** to **f20.**

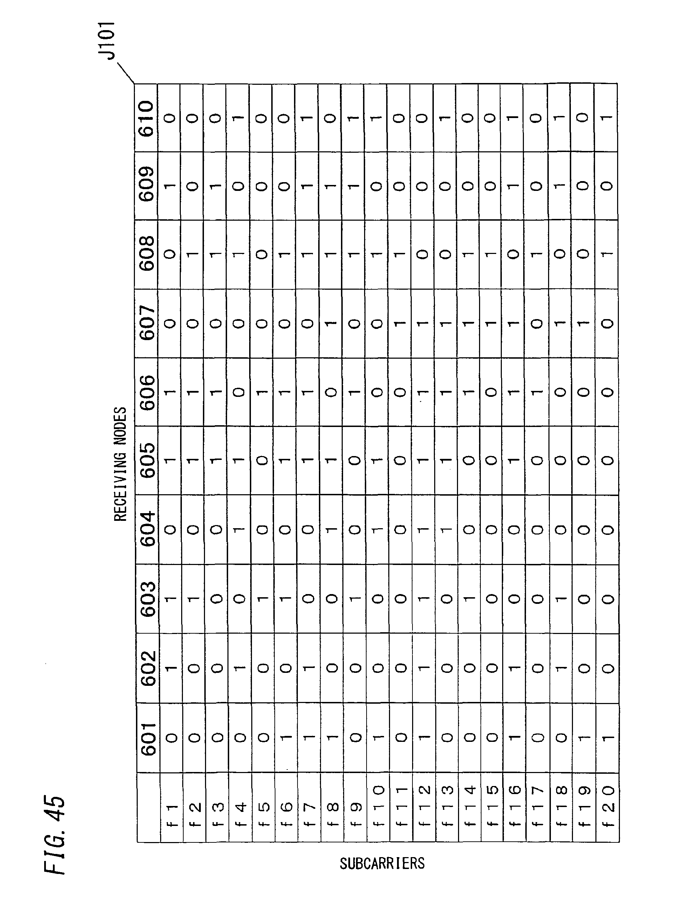

In this regard, FIG. 45 shows transmission path condition information **J101** which represents the condition of transmission paths between the sending node **501** and the receiving nodes **601** to **610.** The transmission path condition information **J101** is defined by a data table of each receiving node, with regard to communication between the sending node **501** and the receiving nodes **601** to **610.** In the data table, an available subcarrier is denoted by the symbol "1", and an unavailable subcarrier is denoted by the symbol "0".

As mentioned above, the subcarrier which enables the sending node **501** to communicate with the receiving node is different for each of the receiving nodes **601** to **610.** In view of this, in the past, there has been proposed a method in which the same data is allocated to all the subcarriers **f1** to **f20** and is simultaneously broadcast. However, the amount of sendable information per unit time is limited.

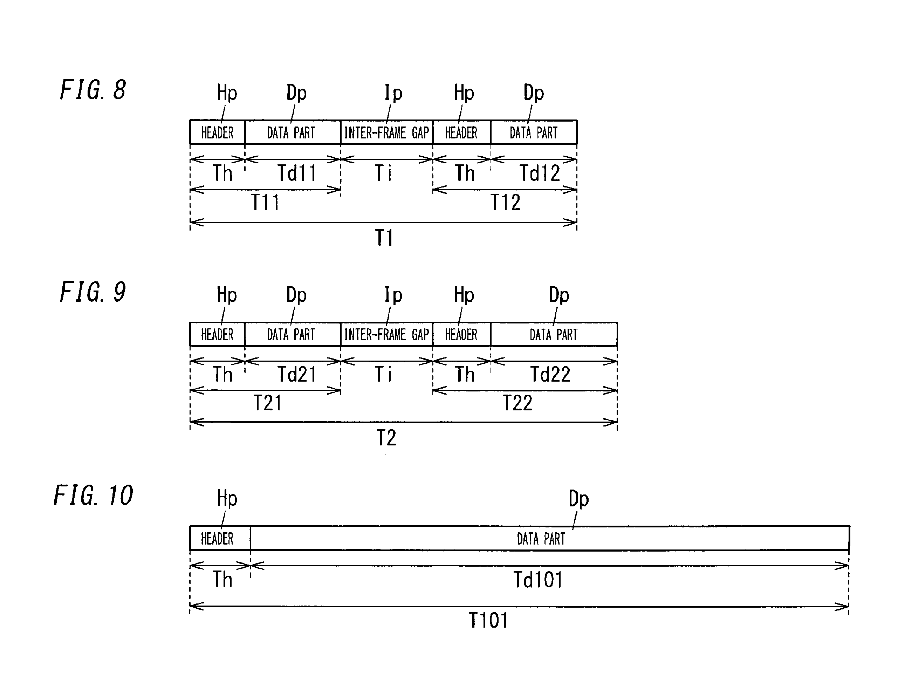

In this regard, as shown in FIG. 10, a data frame of a signal sent by the sending node **501** is constituted by a header **Hp** and a data body **Dp.** The header **Hp** contains information such as a sending address and a receiving address, and the data body Dp contains a content of data to be sent.

Hence, as shown in FIG. 10, an accumulated sending period **T101** necessary for data transmission is defined as the sum of a sending period **Th** for the header **Hp** and a sending period **Td101** for the data body **Dp.** For example, when the sending node **501** transmits data of 800 bits (100 bytes) and the same data is sent through each of the subcarriers **f1** to **f20** at one bit per packet, the number of packets of the data body Dp is 800. In brief, the accumulated sending period T101 is expressed as **T101** = **Th** + **Td101** (800 packets).

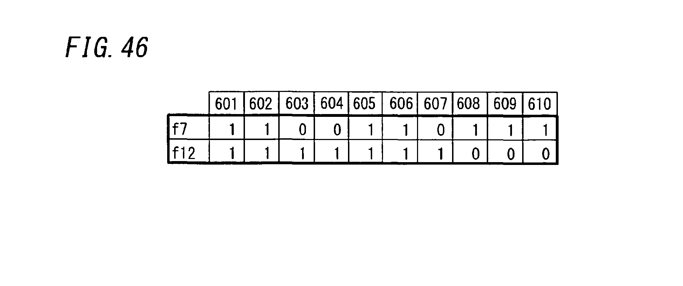

Furthermore, as another method for simultaneous broadcast, a method of using a combination of subcarriers communicable to some of the receiving nodes **601** to **610** has been proposed. According to this method, it is possible to simultaneously broadcast the same data to all of the receiving nodes **601** to **610.** For example, the subcarrier **f7** is not available for communication with the receiving nodes **603, 604,** and **607.** However, as shown in FIG. **46****,** use of a combination of the subcarrier **f7** and the subcarrier **f12** which is available for communication with the receiving nodes 603, **604,** and **607** enables communication with all of the receiving nodes **601** to **610.** Similarly, by using a combination of the plural subcarriers communicable to some of the receiving nodes, the amount of sendable information per unit time can be increased. For example, in the case shown in FIG. 45, the number of the subcarriers available for combinations enabling the sending node **501** to perform simultaneous broadcast to the receiving nodes **601** to **610** is five. However, since the remaining fifteen subcarriers are not used, use of the subcarriers is not necessarily efficient. Hence, further improvement of a communication rate has been desired.

### Summary of Invention

In view of the above insufficiency, the present invention has aimed to propose a communication system capable of improving communication efficiency in a process of simultaneous broadcast based on a multicarrier modulation method using multiple subcarriers.

The first aspect of the communication system in accordance with the present invention is a communication system including plural receiving nodes and a sending node configured to send simultaneous broadcast data to the plural receiving nodes. The sending node includes a sending unit, a storage unit, a node grouping unit, a subcarrier selection unit. The sending unit is configured to send the simultaneous broadcast data to the plural receiving nodes by use of at least one of plural subcarriers preliminarily prepared. The storage unit is configured to store transmission path condition information representing the condition of a transmission path for each of the receiving nodes. The node grouping unit is configured to perform a grouping process of referring to the transmission path condition information, and classifying the plural receiving nodes into plural destination groups based on a classification criterion related to the condition of the transmission path, and creating a destination group set defined by the plural destination groups. The subcarrier selection unit is configured to refer to the transmission path condition information and select, from the plural subcarriers, a subcarrier to send the simultaneous broadcast data to the receiving node belonging to the destination group, for each of the destination groups of the destination group set. The sending unit is configured to send the simultaneous broadcast data to each of the plural destination groups of the destination group set by use of the subcarrier or subcarriers selected by the subcarrier selection unit in turn.

As for the second aspect of the communication system in accordance with the present invention, in addition to the first aspect, the condition of the transmission path indicates for each subcarrier whether or not the subcarrier is an effective subcarrier available for communication with the receiving node.

As for the third aspect of the communication system in accordance with the present invention, in addition to the second aspect, the node grouping unit is configured to, in the grouping process, perform a selection process, a calculation process, a judgment process, and a classification process. The selection process is defined as a process of selecting the effective subcarrier of the receiving node having the least number of effective subcarriers, as a priority subcarrier. The calculation process is defined as a process of calculating the number of priority subcarriers included in the effective subcarriers of the receiving node, for each receiving node. The judgment process is defined as a process of judging whether or not the number of priority subcarriers is not less than a grouping threshold, for each receiving node. The classification process is defined as a process of classifying the receiving node having the number of priority subcarriers not less than the grouping threshold into the destination group which is different from the destination group including the receiving node having the number of priority subcarriers less than the grouping threshold.

As for the fourth aspect of the communication system in accordance with the present invention, in addition to the third aspect, the grouping threshold is a constant value.

As for the fifth aspect of the communication system in accordance with the present invention, in addition to the third aspect, the node grouping unit is configured to create the plural destination group sets by performing the plural grouping processes having the mutually different grouping thresholds, and select one from the plural destination group sets according to a predetermined condition.

As for the sixth aspect of the communication system in accordance with the present invention, in addition to any one of the third to fifth aspects, the node grouping unit is configured to perform multiple separation processes defined by a combination of the selection process, the calculation process, the judgment process, and the classification process to create the destination group set defined by the three or more destination groups. The node grouping unit is configured to, in the classification process, create a first destination group with the number of priority subcarriers not less than the grouping threshold and a second destination group with the number of priority subcarriers less than the grouping threshold. The node grouping unit is configured to perform a first round of the separation processes with regard to all of the receiving nodes, and perform a second or subsequent rounds of the separation processes with regard to the second destination group created through the previous separation process.

As for the seventh aspect of the communication system in accordance with the present invention, in addition to the second aspect, the node grouping unit in configured to, in the grouping process, perform a selection process, a calculation process, a judgment process, and a classification process. The selection process is defined as a process of selecting the effective subcarrier of the receiving node having the least number of effective subcarriers, as a priority subcarrier. The calculation process is defined as a process of calculating the number of priority subcarriers included in the effective subcarriers of the receiving node, for each receiving node. The judgment process is defined as a process of judging whether or not the number of priority subcarriers is not less than a grouping threshold, for each receiving node. The classification process is defined as a process in which the node grouping unit judges whether or not plural boundary receiving nodes each defined as the receiving node having the least number of priority subcarriers out of the receiving nodes having the number of priority subcarriers not less than the grouping threshold exist, and, upon concluding that the plural boundary receiving nodes exist, creates the plural destination group sets based on a combination of the plural boundary receiving nodes and the receiving node having the number of priority subcarriers greater than the number of priority subcarriers of the boundary receiving nodes.

As for the eighth aspect of the communication system in accordance with the present invention, in addition to the seventh aspect, the node grouping unit is configured to, in the classification process, classify the boundary receiving node(s) having the less number of effective subcarriers out of the plural boundary receiving nodes into the same destination group that includes the receiving node having the number of priority subcarriers greater than that of the boundary receiving node, in priority to the boundary receiving node having the greater number of effective subcarriers.

As for the ninth aspect of the communication system in accordance with the present invention, in addition to the second aspect, the subcarrier selection unit is configured to classify the plural subcarrier into shared subcarriers and unshared subcarriers, for each of the destination groups of the destination group set. The shared subcarrier is defined as the subcarrier serving as the effective subcarrier to all of the receiving nodes included in the destination group. The unshared subcarrier is defined as the subcarrier serving as the effective subcarrier to not all but at least one of the receiving nodes included in the destination group. The subcarrier selection unit is configured to create a subcarrier set for each of the destination groups of the destination group set. The subcarrier set includes at least one of the shared subcarrier and an unshared subcarrier set. The unshared subcarrier set is defined as a group of the plural unshared subcarriers selected so as to allow all of the receiving nodes belonging to the destination group to receive the simultaneous broadcast data. The sending unit is configured to send the simultaneous broadcast data by use of the subcarrier set created by the subcarrier selection unit, for each of the destination groups of the destination group set.

As for the tenth aspect of the communication system in accordance with the present invention, in addition to the first aspect, the sending node further includes a sending period calculation unit. The node grouping unit is configured to create the plural destination group sets by performing the plural grouping processes having the mutually different classification criteria, and select one from the plural destination group sets according to a predetermined condition. The sending period calculation unit is configured to calculate an accumulated sending period necessary to send the simultaneous broadcast data to all of the receiving nodes, for each of the destination group sets. The predetermined condition is that the accumulated sending period is the shortest.

As for the eleventh aspect of the communication system in accordance with the present invention, in addition to the ninth aspect, the sending node further includes a sending period calculation unit. The node grouping unit is configured to create the plural destination group sets by performing the plural grouping processes having the mutually different classification criteria, and select one from the plural destination group sets according to a predetermined condition. The subcarrier selection unit is configured to create the subcarrier set for each of the destination groups with regard to each of the plural destination group sets created by the node grouping unit. The sending period calculation unit is configured to calculate a carrier number defined as the sum of the number of shared subcarriers and the number of unshared subcarrier sets with regard to the subcarrier set, for each of the destination group, and calculate an accumulated sending period based on the carrier number, for each of the destination group sets. The accumulated sending period is defined as the time necessary to send the simultaneous broadcast data to all of the receiving nodes. The predetermined condition is that the accumulated sending period is the shortest.

As for the twelfth aspect of the communication system in accordance with the present invention, in addition to the first aspect, the sending node further includes a sending period calculation unit and a modulation method selection unit. The sending unit is configured to send the simultaneous broadcast data by using one of the plural modulation methods. The storage unit is configured to store the transmission path condition information for each of the modulation methods. The node grouping unit is configured to create the plural destination group sets by performing the plural grouping processes having the mutually different classification criteria, for each of the modulation methods, and select one from the plural destination group sets according to a predetermined condition. The sending period calculation unit is configured to calculate an accumulated sending period necessary to send the simultaneous broadcast data to all of the receiving nodes, for each of the destination group sets. The predetermined condition is that the accumulated sending period is the shortest. The modulation method selection unit is configured to select the modulation method according to the destination group set selected by the node grouping unit. The sending unit is configured to send the simultaneous broadcast data by use of the modulation method selected by the modulation method selection unit.

As for the thirteenth aspect of the communication system in accordance with the present invention, in addition to the ninth aspect, the sending node further includes a sending period calculation unit and a modulation method selection unit. The sending unit is configured to send the simultaneous broadcast data by using one selected from plural modulation methods. The storage unit is configured to store the transmission path condition information for each of the modulation methods. The node grouping unit is configured to create the plural destination group sets by performing the plural grouping processes having the mutually different classification criteria, for each of the modulation methods, and select one from the plural destination group sets according to a predetermined condition. The subcarrier selection unit is configured to create the subcarrier set for each of the destination groups with regard to each of the plural destination group sets created by the node grouping unit. The sending period calculation unit is configured to calculate a carrier number defined as the sum of the number of shared subcarriers and the number of unshared subcarrier sets included in the subcarrier set, for each of the destination group of the destination group set, and calculate an accumulated sending period based on the carrier number, for each of the destination group sets. The accumulated sending period is defined as the time necessary to send the simultaneous broadcast data to all of the receiving nodes. The predetermined condition is that the accumulated sending period is the shortest. The modulation method selection unit is configured to select the modulation method according to the destination group set selected by the node grouping unit. The sending unit is configured to send the simultaneous broadcast data by use of the modulation method selected by the modulation method selection unit.

As for the fourteenth aspect of the communication system in accordance with the present invention, in addition to the eleventh or thirteenth aspect, the sending unit is configured to send the simultaneous broadcast data to the next destination group after the passage of a predetermined interval period from time of sending the simultaneous broadcast data to the previous destination group. The sending period calculation unit is configured to calculate a sending period necessary to send the simultaneous broadcast data to all of the receiving nodes belonging to the destination group, for each of the destination groups of the destination group, and calculate the accumulated sending period of the destination group set by adding the sum of the sending periods of the respective plural destination groups of the destination group set to the total of the interval periods.

As for the fifteenth aspect of the communication system in accordance with the present invention, in addition to the first aspect, the sending unit is configured to send destination group information together with the simultaneous broadcast data. The destination group information includes destination information indicative of the destination group selected as a destination of the simultaneous broadcast data. The receiving node is configured to, upon receiving the simultaneous broadcast data and the destination group information, judge whether or not the receiving node belongs to the destination group indicated by the destination information included in the received destination group information, and to, upon concluding that the receiving node belongs to the destination group indicated by the destination information, accept the simultaneous broadcast data, and to, upon concluding that the receiving node does not belong to the destination group indicated by the destination information, discard the simultaneous broadcast data.

### Brief Description of the Drawings

FIG. 1 is a block diagram illustrating a configuration of a communication device in a communication system of the first embodiment,
FIG. 2 is a diagram illustrating a whole configuration of the communication system of the first embodiment,
FIG. 3 is a table illustrating transmission path condition information in the first embodiment,
FIG. 4 is a diagram illustrating a configuration of a destination group in the first embodiment,
FIG. 5 is a diagram illustrating the configuration of the destination group in the first embodiment,
FIG. 6 is a table illustrating allocation of subcarriers for each destination group in the first embodiment,
FIG. 7 is a table illustrating the allocation of the subcarriers for each destination group in the first embodiment,
FIG. 8 is a diagram illustrating a format of a configuration of a data frame in the first embodiment,
FIG. 9 is a diagram illustrating the format of the configuration of the data frame in the first embodiment,
FIG. 10 is a diagram illustrating the format of the configuration of the data frame in the first embodiment,
FIG. 11 is a diagram illustrating a format of a configuration of a header in the first embodiment,
FIG. 12 is a diagram illustrating a format of a configuration of subcarrier group information in the first embodiment,
FIG. 13 is a diagram illustrating the format of the configuration of the subcarrier group information in the first embodiment,
FIG. 14 is a table illustrating a calculation process of calculating the number of effective subcarriers in the first embodiment,
FIG. 15 is a table illustrating a calculation process of calculating the number of priority subcarriers in the first embodiment,
FIG. 16 is a table illustrating a sort process of arranging receiving nodes according to the number of priority subcarriers in the first embodiment,
FIG. 17 is a diagram illustrating the configuration of the destination group in the first embodiment,
FIG. 18 is a diagram illustrating the configuration of the destination group in the first embodiment,
FIG. 19 is a table illustrating the allocation of the subcarriers for each destination group in the first embodiment,
FIG. 20 is a table illustrating the allocation of the subcarriers for each destination group in the first embodiment,
FIG. 21 is a diagram illustrating the sort process of arranging the receiving nodes according to the number of priority subcarriers in the second embodiment,
FIG. 22 is a table illustrating a creation process of the destination group in the second embodiment,
FIG. 23 is a table illustrating the creation process of the destination group in the second embodiment,
FIG. 24 is a table illustrating the creation process of the destination group in the second embodiment,
FIG. 25 is a table illustrating the other creation process of the destination group in the second embodiment,
FIG. 26 is a table illustrating the other creation process of the destination group in the second embodiment,
FIG. 27 is a table illustrating the other creation process of the destination group in the second embodiment,
FIG. 28 is a diagram illustrating the sort process of arranging the receiving nodes according to the number of priority subcarriers in the third embodiment,
FIG. 29 is a table illustrating the allocation of the subcarriers for each destination group in the third embodiment,
FIG. 30 is a table illustrating the transmission path condition information at the second round of the grouping processes in the third embodiment,
FIG. 31 is a table illustrating the sort process of arranging the receiving nodes according to the number of priority subcarriers at the second round of the grouping processes in the third embodiment,
FIG. 32 is a table illustrating the allocation of the subcarriers for each destination group at the second round of the grouping processes in the third embodiment,
FIG. 33 is a table illustrating the transmission path condition information at the third round of the grouping processes in the third embodiment,
FIG. 34 is a table illustrating the sort process of arranging the receiving nodes according to the number of priority subcarriers at the third round of the grouping processes in the third embodiment,
FIG. 35 is a table illustrating the allocation of the subcarriers for each destination group at the third round of the grouping processes in the third embodiment,
FIG. 36 is a diagram illustrating the format of the configuration of the data frame in the fourth embodiment,
FIG. 37 is a diagram illustrating the sort process of arranging the receiving nodes according to the number of priority subcarriers in the fourth embodiment,
FIG. 38 is a diagram illustrating the sort process of arranging the receiving nodes according to the number of priority subcarriers in the fourth embodiment,
FIG. 39 is a diagram illustrating the sort process of arranging the receiving nodes according to the number of priority subcarriers in the fourth embodiment,
FIG. 40 is a diagram illustrating the sort process of arranging the receiving nodes according to the number of priority subcarriers in the fourth embodiment,
FIG. 41 is a diagram illustrating the other sort process of arranging the receiving nodes according to the number of priority subcarriers in the fourth embodiment,
FIG. 42 is a diagram illustrating the other sort process of arranging the receiving nodes according to the number of priority subcarriers in the fourth embodiment,
FIG. 43 is a table illustrating a modulation method selection process performed by a modulation method selection unit in the fifth embodiment,
FIG. 44 is a diagram illustrating a whole configuration of a prior communication system,
FIG. 45 is a table illustrating prior transmission path condition information,
   and
FIG. 46 is a table illustrating combinations relating to prior subcarriers.

### Description of Embodiments

### (FIRST EMBODIMENT)

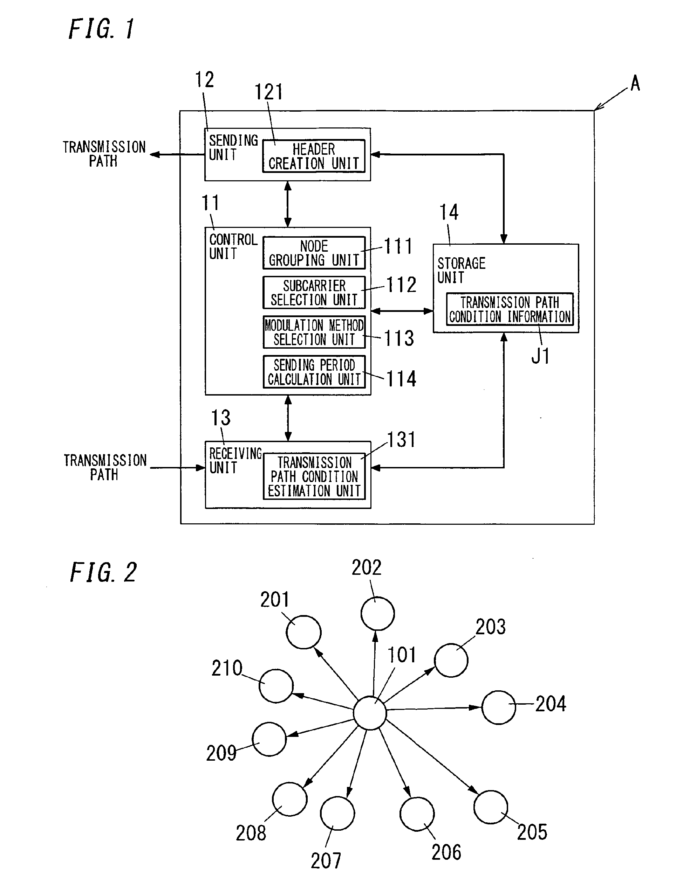

As shown in FIG. 2, the communication system of the present embodiment includes one sending node **101** and ten receiving nodes **201** to **210.** The sending node 101 performs multicarrier communication with the ten receiving nodes **201** to **210** by use of twenty subcarriers **f1** to **f20.** Either a wired transmission path or a wireless transmission path may be used as a transmission path of the above communication.

Note that, it is sufficient that the sending node **101** has at least a data sending function and each of the receiving nodes **201** to **210** has at least a data receiving function. Further, the sending node **101** and the receiving nodes **201** to **210** may be constituted by a communication device having the data sending function and the data receiving function. In the present embodiment, communication devices "A" having a data sending and receiving function as shown in FIG. 1 are used as the sending node **101** and the receiving nodes **201** to **210.** Besides, when there is no need to distinguish between the receiving nodes **201** to **210,** they are referred to as the receiving node **2.** The number of the receiving nodes 2 is not limited to **10.**

As shown in FIG. 1, each of the communication devices "A" configured to serve as the sending node **101** and the receiving nodes **201** to **210** includes a control unit **11,** a sending unit **12,** a receiving unit 13, and a storage unit **14.**

The control unit **11** monitors and controls operation of respective units (the sending unit **12,** the receiving unit **13,** and the storage unit **14**). The control unit **11** includes a node grouping unit **111,** a subcarrier selection unit **112,** a modulation method selection unit **113,** and a sending period calculation unit **114.**

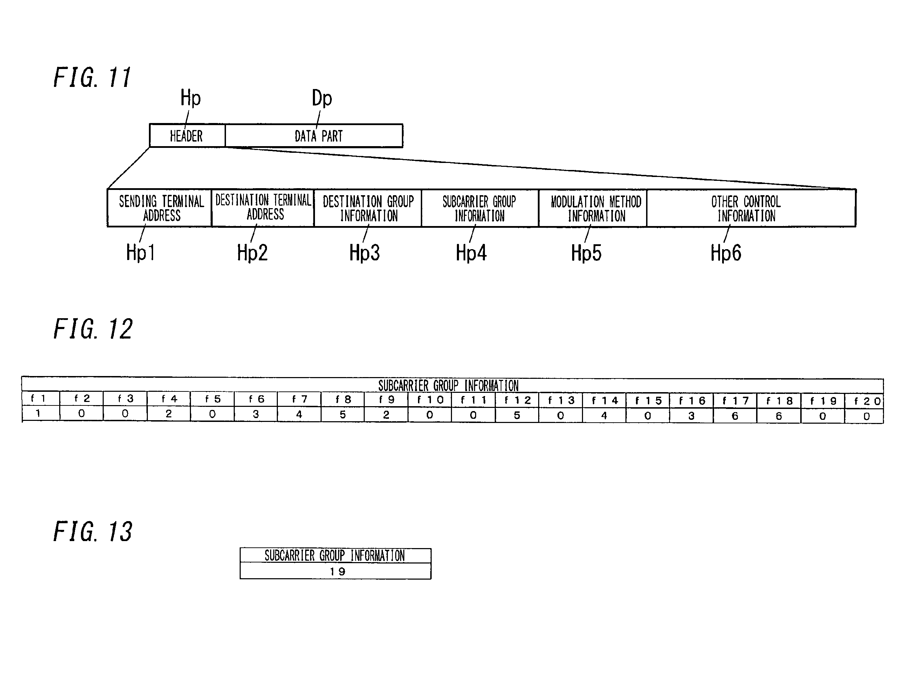

The sending unit **12** is configured to send data (simultaneous broadcast data) to the plural receiving nodes **2** by use of at least one of plural (twenty, in the present embodiment) subcarriers preliminarily prepared. In the present embodiment, the sending unit **12** has a modulation function of sending data by use of the twenty subcarriers **f1** to **f20.** The sending unit **12** includes a header creation unit **121.** As mentioned below, the header creation unit **121** creates a header **Hp.** The header Hp is placed before a data body **Dp** (see FIG. 11).

The receiving unit 13 has a demodulation function of receiving data by use of the twenty subcarriers **f1** to **f20.** The receiving unit **13** includes a transmission path condition estimation unit **131.**

The sending unit **12** and the receiving unit **13** are configured to enable switching between plural modulation methods. When one is selected from the plural modulation methods, the sending unit **12** and the receiving unit **13** send and receive data by use of the selected modulation method. In brief, the sending unit **12** is configured to send the simultaneous broadcast data by use of one selected from the plural modulation methods. For example, in the present embodiment, the modulation methods are BPSK, QPSK, 16QAM, 64QAM, and 256QAM. BPSK is an abbreviation for Binary Phase Shift Keying. QPSK is an abbreviation for Quadrature Phase Shift Keying. QAM is an abbreviation for Quadrature Amplitude Modulation.

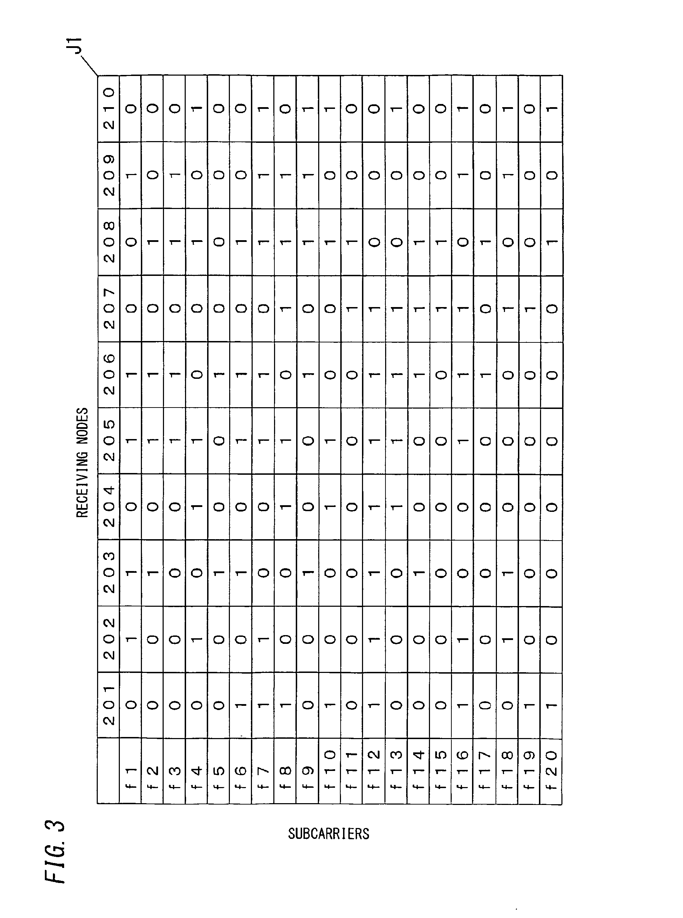

The storage unit **14** is configured to store transmission path condition information **J1** indicative of a condition of a transmission path between the sending node **101** and each of the receiving nodes **201** to **210.** The storage unit **14** is configured to the transmission path condition information J1 representing the condition of the transmission path for each of the receiving nodes 2. The condition of the transmission path indicates for each subcarrier whether or not the subcarrier is an effective subcarrier available for communication with the receiving node 2. As shown in FIG. 3, the transmission path condition information **J1** is defined by a data table of each receiving node, with regard to communication between the sending node **101** and the receiving nodes **201** to **210.** In the data table, an available subcarrier (effective subcarrier) is denoted by the symbol "1", and an unavailable subcarrier (ineffective subcarrier) is denoted by the symbol "0". The transmission path condition information **J1** is created for each of the modulation methods of BPSK, QPSK, 16QAM, 64QAM, and 256QAM. In brief, the storage unit **14** is configured to store the transmission path condition information **J1** for each of the modulation methods.

The transmission path condition information **J1** is created through the following procedure. Firs, the control unit 11 of the sending node **101** sends the same test frame to the receiving nodes **201** to **210** by use of all the subcarriers f1 to **f20.** Upon receiving the test frame, each of the control units **11** of the receiving nodes **201** to **210** analyzes the test frame with regard to all the subcarriers **f1** to **f20,** and returns a response frame including information indicative of the subcarrier which has made a success of reception of the test frame, to the sending node **101.** When the sending node **101** receives the response frame, the transmission path condition estimation unit **131** analyzes each of the response frames respectively received from the receiving nodes **201** to **210,** and judges which subcarrier is the subcarrier enabling normal communication with the receiving nodes **(201** to **210)** (i.e., the effective subcarrier) for each receiving node. Thereafter, the transmission path condition estimation unit **131** of the sending node **101** creates the transmission path condition information **J1** based on this judgment result, and stores the created transmission path condition information **J1** in the receiving unit **13.** This creation process is performed for each of the modulation methods of BPSK, QPSK, 16QAM, 64QAM, and 256QAM. Note that, the sending node **101** may create the transmission path condition information **J1** periodically and store the created transmission path condition information **J1** in the storage unit **14.** In brief, the sending node **101** may update the transmission path condition information **J1** periodically. Alternatively, to use the latest transmission path condition information **J1,** the sending node 101 may create the transmission path condition information **J1** before sending the simultaneous broadcast data.

Further, in a process of returning the response frame, each of the receiving nodes **201** to **210** returns the same response frame by use of all the subcarriers **f1** to **f20.** Thus, the transmission path condition estimation unit **131** of the sending node **101** analyzes the response frames of all the subcarriers **f1** to **f20,** and judges which subcarrier is the subcarrier which has made a success of reception of the response frame. Thereafter, based on this judgment result, the transmission path condition estimation unit **131** of the sending node **101** can also obtain information of the subcarrier available to communication from each of the receiving nodes **201** to **210** to the sending node **101.**

The following explanation is made to a process in which the sending node 101 performs simultaneous broadcast (e.g., broadcast and multicast) to send the simultaneous broadcast data to the receiving nodes **201** to **210.**

First, when the sending node **101** broadcasts simultaneously the simultaneous broadcast data to the receiving nodes **201** to **210,** the control unit **11** performs grouping of the subcarriers based on the transmission path condition information **J1.** The grouping is a matter of combinatorial optimization, and the combinatorial optimization itself is well being studied. There have been proposed various methods according to problems. However, the communication system employing a multicarrier method generally has many limitations, and more simplified method has been desired.

To enable simultaneous broadcast of the same data to all of the receiving nodes 2 and use the subcarriers efficiently, it is required to minimize the number of the subcarriers carrying the same data and allocated to the same receiving node **2.** The present inventors have attempted to fulfill this requirement based on two viewpoints. The first is the total number of the receiving nodes to which each subcarrier is allocated, and the second is the total number of the subcarriers allocated to each of the receiving nodes **2.**

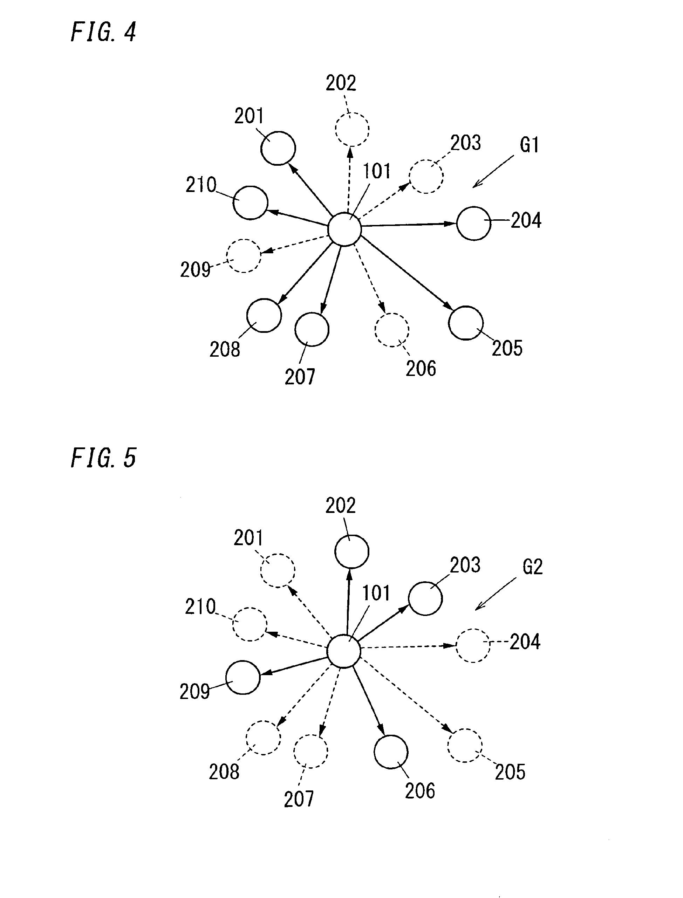

FIGS. **4** and **5** show diagrams illustrating a concept of simultaneous broadcast performed by the communication system in accordance with the present invention. First, according to a communication condition, the sending node **101** does not perform simultaneous data transmission to all of the receiving nodes **201** to **210** simultaneously, but perform multiple data transmission. In this situation, the communication efficiency can be improved. In other words, the node grouping unit **111** of the sending node **101** performs grouping of classifying the receiving nodes **201** to **210** into two or more destination groups, and the sending unit **12** sends the simultaneous broadcast data to each destination group in turn. The node grouping unit **111** is configured to refer to the transmission path condition information **J1** stored in the storage unit **14,** and classify the plural receiving nodes **2** into plural destination groups based on a classification criterion related to the condition of the transmission path, and create a destination group set defined by the plural destination groups.

In this regard, the subcarrier selection unit **112** of the sending node **101** refers to the transmission path condition information **J1,** and selects a shared subcarrier and an unshared subcarrier group (unshared subcarrier set) from the subcarriers **f1** to f20 for each destination group. The simultaneous broadcast data is sent by use of the shared subcarrier and the unshared subcarrier group for each destination group. The shared subcarrier is defined as a subcarrier available to communication between all of the receiving nodes 2 belonging to the same destination group. In contrast, a subcarrier which is available to communication between part of all of the receiving nodes 2 belonging to the destination group is referred to as an unshared subcarrier. The unshared subcarrier group is constituted by a combination of the plural unshared subcarriers. With using simultaneously the plural unshared subcarriers constituting the single unshared subcarrier group, communication between all of the receiving nodes 2 belonging to the same destination group is enabled.

As mentioned above, the subcarrier selection unit **112** is configured to refer to the transmission path condition information **J1** stored in the storage unit **14** and select, from the plural subcarriers **f1** to **f20,** a subcarrier for sending the simultaneous broadcast data to the receiving node 2 belonging to the destination group, for each of the destination groups of the destination group set.

Particularly, in the present embodiment, the subcarrier selection unit **112** is configured to classify the plural subcarrier into the shared subcarrier and the unshared subcarrier, for each of the destination groups of the destination group set. The shared subcarrier is defined as the subcarrier serving as the effective subcarrier to all of the receiving nodes 2 included in the (same) destination group. The unshared subcarrier is defined as the subcarrier serving as the effective subcarrier to not all but at least one of the receiving nodes 2 included in the (same) destination group.

The subcarrier selection unit **112** is configured to create a subcarrier set for each of the destination groups of the destination group set. The subcarrier set includes at least one of the shared subcarrier and the unshared subcarrier set. The unshared subcarrier set is defined by the plural unshared subcarriers selected so as to allow all of the receiving nodes **2** belonging to the (same) destination group to receive the simultaneous broadcast data.

The sending unit **12** is configured to send the simultaneous broadcast data to each of the destination groups included in the destination group set in turn, by use of the subcarrier selected by the subcarrier selection unit **112.** In the present embodiment, the sending unit **12** is configured to send the simultaneous broadcast data by use of the subcarrier set created by the subcarrier selection unit **112,** for each of the destination groups of the destination group set. Further, the sending unit **12** is configured to send destination group information together with the simultaneous broadcast data. The destination group information includes destination information indicative of the destination group selected as a destination of the simultaneous broadcast data and classification information indicative of the receiving node belonging to the destination group indicated by the destination information.

The simultaneous broadcast data is divided into mutually different divisional data, and the divisional data are allocated to the shared subcarrier and the unshared subcarrier set, respectively. Hence, an amount of information sent at one time can be increased.

In this present embodiment, the node grouping unit **111** performs grouping of dividing the ten receiving nodes **201** to **210** into the two destination groups **G1** and **G2.** In other words, the node grouping unit **111** creates the destination group set defined by the two destination groups **G1** and **G2.** FIG. 4 shows the destination group **G1,** and the six receiving nodes **201, 204, 205, 207, 208,** and **210** belong to the destination group **G1.** FIG. **5** shows the destination group **G2,** and the four receiving nodes **202, 203, 206,** and **209** belong to the destination group **G2.**

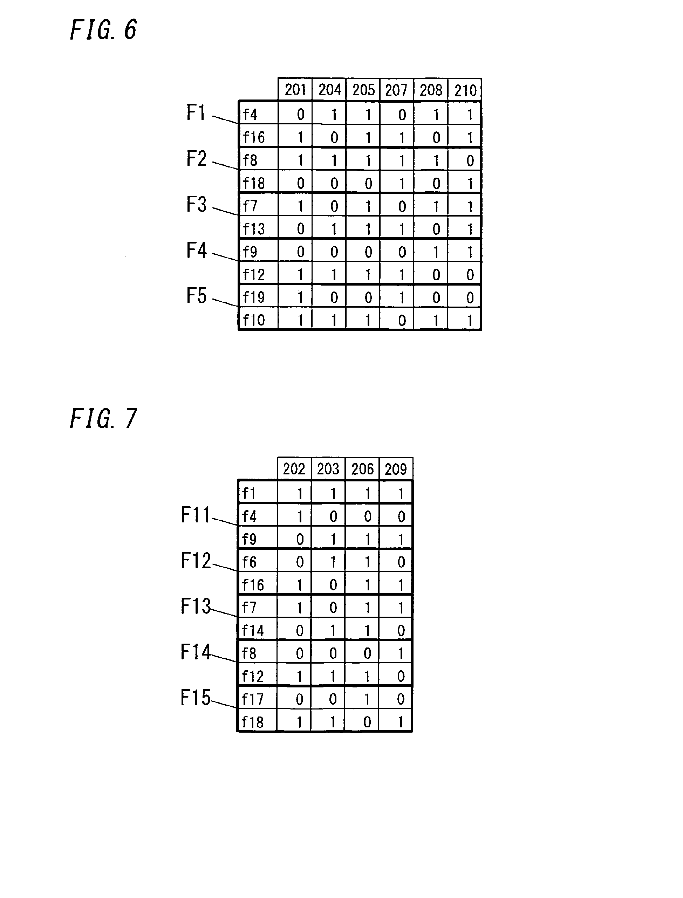

With regard to the destination group **G1,** the simultaneous broadcast data is sent by use of the five unshared subcarrier groups **F1** to **F5** shown in FIG. 6. In other words, the subcarrier set associated with the destination group **G1** includes the five unshared subcarrier groups **F1** to **F5.** The unshared subcarrier group **F1** is constituted by the two subcarriers **f4** and **f16,** and the unshared subcarrier group **F2** is constituted by the two subcarriers **f8** and **f18,** and the unshared subcarrier group **F3** is constituted by the two subcarriers **f7** and **f13.** Further, the unshared subcarrier group **F4** is constituted by the two subcarriers **f9** and **f12,** and the unshared subcarrier group **F5** is constituted by the two subcarriers **f19** and **f10.**

In contrast, with regard to the destination group G2, the simultaneous broadcast data is sent by use of the single shared subcarrier **f1** and the five unshared subcarrier groups **F11** to **F15** shown in FIG. 7. In other words, the subcarrier set associated with the destination group G2 includes the single shared subcarrier **f1** and the five unshared subcarrier groups **F11** to **F15.** The unshared subcarrier group **F11** is constituted by the two subcarriers **f4** and **f9,** and the unshared subcarrier group **F12** is constituted by the two subcarriers **f6** and **f16,** and the unshared subcarrier group **F13** is constituted by the two subcarriers **f7** and **f14.** Further, the unshared subcarrier group **F14** is constituted by the two subcarriers **f8** and **f12,** and the unshared subcarrier group **F15** is constituted by the two subcarriers **f17** and **f18**.

When each of the single shared subcarrier and the single unshared subcarrier group has a data rate of **1** bit per packet, a communication rate of the simultaneous broadcast of each of the destination groups **G1** and **G2** is shown below. With regard to the destination group **G1,** the five unshared subcarrier groups **F1** to F5 are used. Hence, the carrier number is "5", and the data rate is 5 bits per packet. With regard to the destination group G2, the single shared subcarrier **f1** and the five unshared subcarrier groups **F11** to **F15** are used. Hence, the carrier number is "6", and the data rate is 6 bits per packet. The carrier number is defined as the sum of the number of the shared subcarriers and the number of the unshared subcarrier sets (unshared subcarrier groups) included in the subcarrier set. As for the destination group **G1,** since the number of the shared subcarriers is "0" and the number of the unshared subcarrier groups is "5", the carrier number is "5". As for the destination group **G2,** since the number of the shared subcarriers is "1" and the number of the unshared subcarrier groups is "5", the carrier number is "6".

In this regard, the grouping of the destination groups by the node grouping unit **111** and the allocation of the shared subcarrier and the unshared subcarrier by the subcarrier selection unit **112** are performed for each modulation method prior to transmission of the simultaneous broadcast data. In this embodiment, the modulation methods include BPSK, QPSK, 16QAM, 64QAM, and 256QAM.

The sending period calculation unit **114** calculates a communication period (communication rate) with regard to a situation where BPSK is used as the modulation method, the communication period (communication rate) with regard to a situation where QPSK is used as the modulation method, the communication period (communication rate) with regard to a situation where 16QAM is used as the modulation method, the communication period (communication rate) with regard to a situation where 64QAM is used as the modulation method, and the communication period (communication rate) with regard to a situation where 256QAM is used as the modulation method. The node grouping unit **111** and the subcarrier selection unit **112** respectively adopts the grouping and the allocation of the shared subcarrier and the unshared subcarrier corresponding to the modulation method having the highest communication rate out of the BPSK, QPSK, 16QAM, 64QAM, and 256QAM. Further, the modulation method selection unit **113** notifies the sending unit **12** of the modulation method corresponding to the highest communication rate. In brief, the modulation method selection unit **113** is configured to refer to the communication periods of the respective modulation methods calculated by the sending period calculation unit **114** and select the modulation method having the shortest communication period out of the plural modulation methods (BPSK, QPSK, 16QAM, 64QAM, and 256QAM). The sending unit 12 is configured to send the simultaneous broadcast data by use of the modulation method selected by the modulation method selection unit **113.**

In this embodiment, a data frame of a signal sent by the sending node 101 is constituted by the header **Hp** and the data body **Dp** in a similar manner as the prior art. Further, interposed between the data frames is an inter-frame gap **Ip** (interval period). The header **Hp** contains information such as a sending address and a receiving address, and the data body **Dp** contains a content of data to be sent. The inter-frame gap **Ip** serves as an interval period for preventing an interference with data which is to be sent next time. The inter-frame gap Ip also serves as an interval period necessary for switching the destination group selected as the destination of the simultaneous broadcast data. In other words, the sending unit **12** is configured to, after the passage of a predetermined interval period from time of sending the simultaneous broadcast data to the destination group, send the simultaneous broadcast data to the next destination group.

As shown in FIG. 8, an accumulated sending period T1 necessary to send the simultaneous broadcast data to all of the receiving nodes **201** to **210** is calculated by adding the inter-frame gap **Ip** to the sum of the sending periods **T11** and **T12** of the respective plural destination groups **G1** and **G2.** In FIG. 8, the inter-frame gap **Ip** is interposed between the sending period **T11** and the sending period **T12.** The sending period **T11** of the destination group **G1** is constituted by a sending period Th of the header **Hp** and a sending period Td11 of the data body **Dp.** The sending period **T12** of the destination group G2 is constituted by the sending period Th of the header **Hp** and a sending period **Td12** of the data body **Dp.** Note that, in the following explanation, the sending period of the header **Hp**, the sending period of the data body **Dp,** and the period of the inter-frame gap **Ip** are referred to as "header sending period", "body sending period", and "gap period", respectively.

For example, the sending node **101** simultaneously broadcasts the simultaneous broadcast data of 800 bits (100 bytes). In this regard, since the data rate of the destination group **G1** is 5 bits per packet, the data body **Dp** sent to the destination group **G1** has **160** packets. Further, since the data rate of the destination group **G2** is 6 bits per packet, the data body **Dp** sent to the destination group **G2** has 134 packets. A ratio of the body sending period Td11 to the body sending period **Td12** is 6:5. In brief, the accumulated sending period **T1** is expressed as **T1= T11 + T12 + Ti** = **Th** + **Td11** (160 packets) + **Th** + **Td12** (134 packets) + **Ti.**

As mentioned above, at the time of the simultaneous broadcast, the grouping of dividing all of the receiving nodes **201** to **210** selected as the destination into the plural destination groups, and the simultaneous broadcast data is sent for each destination group. In contrast to the prior case where the simultaneous broadcast data is simultaneously sent to all of the receiving nodes **201** to **210** selected as the destination, the grouping of the receiving nodes **201** to **210** can shorten the sending period. In other words, the accumulated sending period **T1** (see FIG. 8) is shorter than the accumulated sending period **T101** (see FIG. 10). Hence, in a case where the simultaneous broadcast is performed by use of the multicarrier modulation method using the plural subcarriers, it is possible to improve the communication efficiency.

Next, FIG. 11 shows a configuration of the header **Hp.** The header **Hp** is constituted by six fields **Hp1** to **Hp6.** The header Hp is created by the header creation unit 121 and is placed before the data body **Dp.** The first field **Hp1** serves as a sending terminal address field, and contains the address of the sending node 101. The second field **Hp2** serves as a receiving terminal address field, and contains a simultaneous broadcast address (e.g., a broadcast address and a multicast address) when the simultaneous broadcast is performed. When unicast is performed, the second field **Hp2** contains an individual address of the receiving node **2** selected as the destination. Upon receiving the header **Hp**, the receiving node **2** refers to the sending terminal address field **Hp1.** Hence, the receiving node **2** can identify the sending node.

The third field **Hp3** serves as a destination group information field, and contains destination group information regarding the grouping. For example, the destination group information includes the number of the destination groups, the addresses (classification information) of the receiving nodes 2 belonging to the destination group, and the destination group (destination information) selected as the destination for the data frame attached with the header **Hp.** Note that, the destination group information may not include the number of the destination groups.

Upon receiving the header **Hp**, the receiving node **2** refers to the destination group information field **Hp3,** and judges whether the receiving node **2** obtains or discards the data body **Dp** subsequent to the header **Hp**. In brief, when the data body **Dp** subsequent to the header **Hp** is data destined to the destination group to which the receiving node **2** belongs, the receiving node 2 obtains this data body **Dp.**

In other words, the receiving node **2** is configured to, upon receiving the simultaneous broadcast data and the destination group information, judge whether or not the receiving node belongs to the destination group indicated by the destination information included in the received destination group information, and to, upon concluding that the receiving node belongs to the destination group indicated by the destination information, accept the simultaneous broadcast data, and to, upon concluding that the receiving node does not belong to the destination group indicated by the destination information, discard the simultaneous broadcast data.

Especially, in the present embodiment, the receiving node 2 refers to the classification information of the received destination group information, and judges whether or not the receiving node 2 belongs to the destination group indicated by the destination information.

Note that, in the above case, the classification information is sent to the receiving node 2 together with the simultaneous broadcast data. However, the receiving node 2 may be configured to preliminarily store the destination group to which the receiving node 2 belongs.

In this modification, the sending node **101** is configured to perform the grouping process prior to transmission of the simultaneous broadcast data. For example, the sending node **101** performs the grouping process when the construction of the communication system has completed or when the receiving node **2** has been added to the communication system. In addition, the sending node **101** may perform the grouping process periodically.

Further, before sending the simultaneous broadcast data, the sending node 101 notifies all of the receiving nodes 2 of a result of the grouping process. For example, the sending node **101** sends a notification signal (information notification dedicated packet) for notification of the result of the grouping process to each of the receiving nodes **2.** The notification signal includes an identifier (class identifier) indicative of a signal for notification of the result of the grouping process, grouping information indicative of the result of the grouping process, and sending node address information indicative of the address of the sending node **101.** The grouping information indicates a correspondence relation between the destination group (the identifier individually allocated to the destination group) and the receiving node **2** (the address of the receiving node **2)** belonging to the destination group. Note that, at the time of activation of the communication system, it is preferred that the sending node **101** sends the notification signal to all of the receiving nodes **2** through the broadcast communication. With sending the same grouping information to all of the receiving nodes **2** by use of each of all the subcarriers, it is possible to successfully notify all of the receiving nodes **2** of the result of the grouping process.

The receiving node **2** judges, based on the class identifier, whether or not the received signal is the notification signal. Upon concluding that the received signal is the notification signal, the receiving node **2** retrieves the grouping information from the notification signal. Thereafter, the receiving nodes **2** identifies the destination group including the receiving node **2,** based on the grouping information, and stores the identifier of the destination group including the receiving node **2,** as address information.

In this case, upon receiving the simultaneous broadcast data and the destination group information, the receiving node **2** refers to the address information and judges whether or not the receiving node is included in the destination group indicated by the destination information of the received destination group information. In other words, the receiving node **2** judges whether or not the destination group indicated by the destination information is identical to the destination group indicated by the address information. When the receiving node **2** belongs to the destination group indicated by the destination information (when the destination group indicated by the destination information is identical to the destination group indicated by the address information), the receiving node **2** retrieves the simultaneous broadcast data. When the receiving node **2** does not belong to the destination group indicated by the destination information (when the destination group indicated by the destination information is not identical to the destination group indicated by the address information), the receiving node 2 discards the simultaneous broadcast data.

Note that, the receiving node 2 may store the grouping information without any modification. In this situation, upon receiving the simultaneous broadcast data and the destination group information, the receiving node 2 refers to the grouping information and judges whether or not the receiving node is included in the destination group indicated by the destination information of the received destination group information. Alternatively, the receiving node 2 may extract information indicative of the correspondence relation between the destination group including this receiving node **2** and the receiving nodes **2** belonging to this destination group from the grouping information, and stores only the extracted information.

The fourth field **Hp4** serves as a subcarrier group information field, and contains subcarrier group information indicative of the shared subcarrier and the unshared subcarrier group selected for the destination group designated as the destination. As shown in FIG. 12, in the subcarrier group information, an identification number for the shared subcarrier and the unshared subcarrier group is allocated to each of the subcarriers **f1** to **f20.** Upon receiving the header **Hp,** the receiving node **2** refers to the subcarrier group information field **Hp4,** thereby being capable of knowing the subcarrier group to be used in the present transmission.

FIG. 12 shows the subcarrier group information corresponding to the single shared subcarrier **f1** and the five unshared subcarrier groups **F11** to **F15** illustrated in FIG. 7. The identification number "1" is allocated to the shared subcarrier **f1**, and the identification number "2" is allocated to the two subcarriers **f4** and **f9** constituting the unshared subcarrier group **F11.** The identification number "3" is allocated to the two subcarriers **f6** and **f16** constituting the unshared subcarrier group **F12,** and the identification number "4" is allocated to the two subcarriers **f7** and **f14** constituting the unshared subcarrier group **F13,** and the identification number "5" is allocated to the two subcarriers **f8** and **f12** constituting the unshared subcarrier group **F14.** The identification number "6" is allocated to the two subcarriers **f17** and **f18** constituting the unshared subcarrier group **F15.** In this manner, the smaller identification number is allocated to the shared subcarrier in priority to the unshared subcarrier group. With regard to the shared subcarriers or the unshared subcarrier groups, the smaller identification number is allocated to one including the subcarrier having the smaller subcarrier number. Note that, the identification number "0" is allocated to the subcarrier belonging to neither the shared subcarrier nor the unshared subcarrier group.

The fifth field **Hp5** serves as a modulation method information field, and contains information regarding the modulation method used for the subcarriers **f1** to f20. In other words, information indicative of the modulation method selected by the modulation method selection unit **113** for the sending unit **12** is contained in the modulation method information field **Hp5.** In the present embodiment, one of BPSK, QPSK, 16QAM, 64QAM, and 256QAM is selected as the modulation method to be used. Upon receiving the header **Hp,** the receiving node 2 refers to the modulation method information field **Hp5** and acquires the information regarding the modulation method.

The sixth field serves as a field for containing various kinds of control information different from information contained in the above fields.

Moreover, the header **Hp** contains a synchronization symbol and an equalization symbol in addition to the above fields, for example.

Upon receiving the simultaneous broadcast data from the sending node **101,** each of the receiving nodes **201** to **210** refers to the fields **Hp1** to **Hp6** of the header **Hp,** and performs judgment of whether or not it retrieves data, demodulation, data analysis, and synchronization, for example.

The format for the subcarrier group information included in the subcarrier group information field **Hp4** is not limited to the format illustrated in FIG. 12, but may be, as shown in FIG. 13, the format of using an subcarrier group ID (e.g., the subcarrier group ID "19"). With regard to each of the sending node 101 and the receiving nodes **201** to **210,** the storage unit **14** preliminarily stores all patterns of the subcarrier information allocated to the subcarriers f1 to **f20.** The subcarrier group ID is assigned to each pattern of the subcarrier group information. The sending node **101** sends the subcarrier group ID to the receiving nodes **201** to **210.** Each of the receiving nodes **201** to **210** refers to the received subcarrier group ID and retrieves the subcarrier information from the storage unit **14.**

Next, an explanation is made to a case of the allocation process of the shared subcarrier and the unshared subcarrier performed by the subcarrier selection unit **112** of the sending node **101.** First, the subcarrier selection unit **112** adopts the subcarrier available to communication with all of the receiving nodes **2** of selected one of the destination groups, as the shared subcarrier, with reference to the transmission path condition information **J1.** Further, the subcarrier selection unit **112** adopts the subcarrier available to communication with some of the receiving nodes **2** of selected one of the destination groups, as the unshared subcarrier. Thereafter, the subcarrier selection unit **112** sorts the unshared subcarriers from the highest rank to the lowest rank in descending order of the number of the communicable receiving nodes **2.** The subcarrier selection unit **112** searches the unshared subcarriers from the lowest rank to the higher rank for the unshared subcarrier available to the receiving node **2** to which the unshared subcarrier sorted as the highest rank is unavailable, and selects the found unshared subcarrier. The subcarrier selection unit **112** groups the selected unshared subcarrier and the unshared subcarrier sorted as the highest rank into the same group, thereby creating the single unshared subcarrier group. The subcarrier selection unit **112** excludes the unshared subcarriers constituting the unshared subcarrier group from the sorted unshared subcarriers, and repeats the process of creating the unshared subcarrier group, thereby creating another unshared subcarrier group.

Note that, there would be other methods for the allocation process of the shared subcarrier and the unshared subcarrier performed by the subcarrier selection unit **112** of the sending node **101.** Hence, the method for the allocation process of the shared subcarrier and the unshared subcarrier is not limited to the above case.

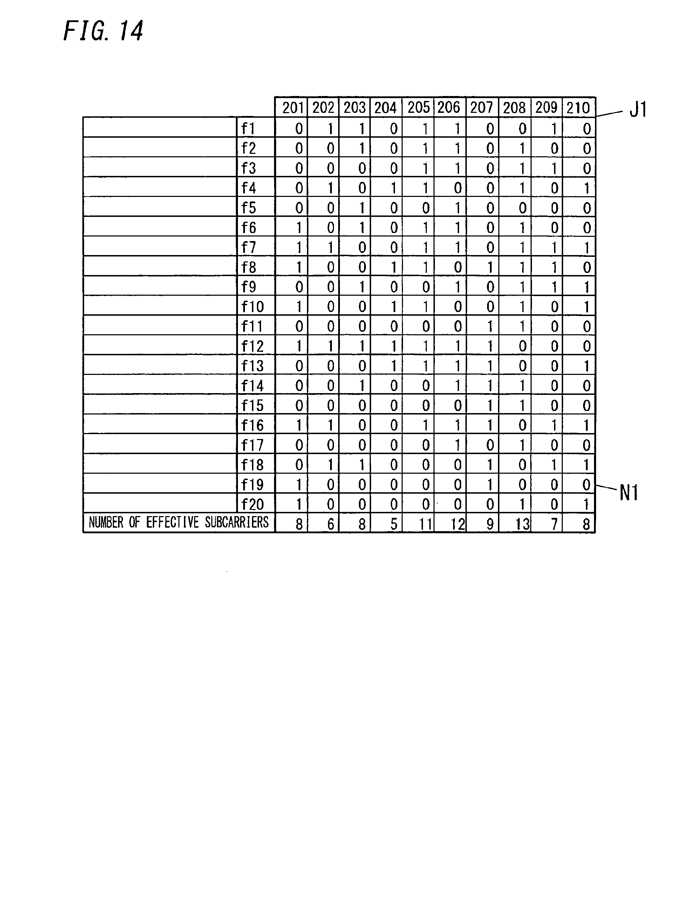

The following explanation referring to FIGS. **14** to **16** is made to a process (grouping process) of creating the destination group performed by the node grouping unit **111** of the sending node **101.**

The node grouping unit **111** reads out the transmission path condition information **J1** from the storage unit **14,** and performs the grouping process for creating the destination group based on the transmission path condition information **J1.** In other words, the node grouping unit **111** is configured to perform the grouping process of referring to the transmission path condition information **J1,** and classifying the plural receiving nodes **2** into the plural destination groups based on the classification criterion related to the condition of the transmission path, and creating the destination group set defined by the plural destination groups.

In the present embodiment, the grouping process includes a selection process, a calculation process, a judgment process, and a classification process. The selection process is defined as a process of selecting the effective subcarrier of the receiving node 2 having the least number of effective subcarriers, as a priority subcarrier. The calculation process is defined as a process of calculating the number of priority subcarriers included in the effective subcarriers of the receiving node **2,** for each receiving node **2.** The judgment process is defined as a process of judging whether or not the number of priority subcarriers is not less than a grouping threshold, for each receiving node **2.** The classification process is defined as a process of classifying the receiving node **2** having the number of priority subcarriers not less than the grouping threshold into the destination group which is different from the destination group including the receiving node **2** having the number of priority subcarriers less than the grouping threshold. In the following explanation, the transmission path condition information J1 illustrated in FIG. 3 is used.

As shown in FIG. **14****,** the node grouping unit **111** calculates, for each of the receiving nodes **201** to **210,** the number **N1** of effective subcarriers based on the transmission path condition information **J1.** The effective subcarrier is defined as a subcarrier enabling the sending node **101** to communicate with corresponding one of the receiving nodes **201** to **210.**

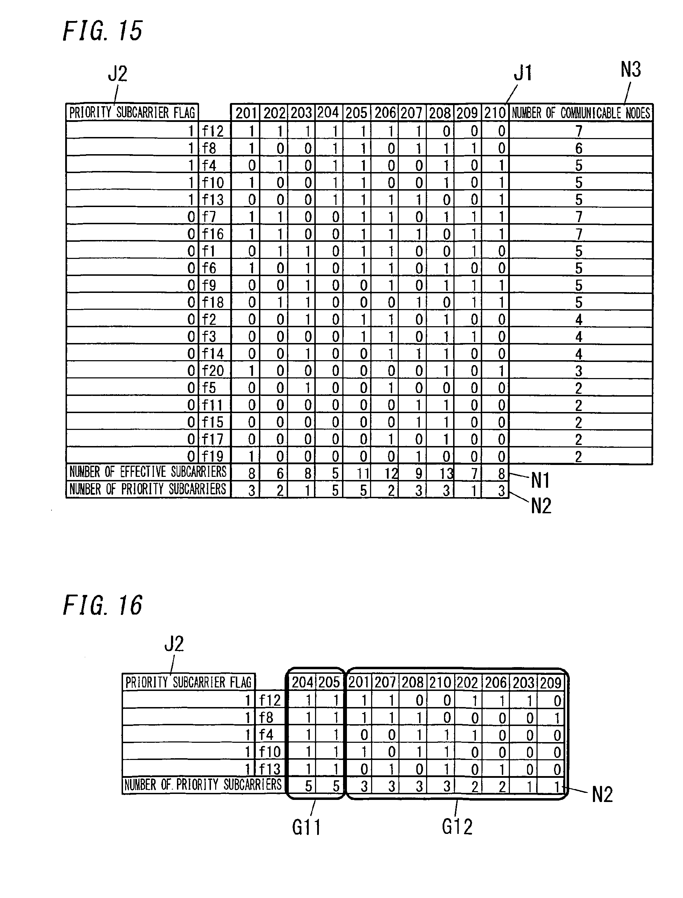

Next, as shown in FIG. 15, the node grouping unit **111** designates the subcarriers **f4, f8, f10, f12,** and **f13** enabling communication with the receiving node 204 having the least number of effective subcarriers, as the priority subcarrier. In brief, the node grouping unit **111** selects the effective subcarrier **f4, f8, f10, f12,** and **f13** of the receiving node **2 (204)** having the least number of effective subcarriers, as the priority subcarrier (the selection process). Note that, a subcarrier not designated as the priority subcarrier is referred to as a non-priority subcarrier. As shown in FIG. **15****,** in the present embodiment, a priority subcarrier flag **J2** indicative of whether or not the subcarrier is the priority subcarrier is provided. The priority subcarrier flag of **"1"** indicates that the subcarrier is the priority subcarrier, and the priority subcarrier flag of "0" indicates that the subcarrier is the non-priority subcarrier.

Further, as shown in FIG. 15, the node grouping unit **111** sorts the priority subcarriers **f4, f8, f10, f12,** and **f13** to the higher rank, thereby changing the order of the subcarriers. With regard to each of sort orders of the priority subcarrier and the non-priority subcarrier, the subcarriers are sorted in descending order of the number (communicable node number) **N3** of the communicable receiving nodes **2.**

Furthermore, as shown in FIG. 15, the node grouping unit **111** calculates the number **N2** of priority subcarriers communicable to the receiving node, for each of the receiving nodes **201** to **210.** In other words, the node grouping unit **111** calculates the number of priority subcarriers included in the effective subcarriers of the receiving node **2,** for each receiving node **2** (the calculation process). According to FIG. 15, the effective subcarriers of the receiving node **201** are the subcarriers **f6, f7, f8, f10, f12, f16, f19,** and **f20,** and the priority subcarriers are the subcarriers **f4, f8, f10, f12,** and **f13.** Hence, with regard to the receiving node **201,** the number of priority subcarriers is "3".

Next, as shown FIG. 16, the node grouping unit **111** sorts the receiving nodes **201** to **210** in descending order of the number **N2** of priority subcarriers. Thereafter, the node grouping unit **111** compares the number **N2** of priority subcarriers with the predetermined grouping threshold of "5" for each of the receiving nodes **201** to **210.** The node grouping unit **111** creates the destination group based on the comparison result. In other words, the node grouping unit **111** judges whether or not the number of priority subcarriers is not less than the grouping threshold (in the present case, "5"), for each receiving node **2** (the judgment process). As shown in FIG. 15, the numbers of priority subcarriers of the respective receiving nodes **204** and **205** are not less than "5". The numbers of priority subcarriers of the respective remaining receiving nodes **201** to **203** and **206** to **210** are less than "5". The node grouping unit **111** classifies the receiving node **2** having the number of priority subcarriers not less than the grouping threshold into the destination group which is different from the destination group including the receiving node **2** having the number of priority subcarriers less than the grouping threshold (the classification process). In the present embodiment, the node grouping unit **111** creates the two destination groups **G11** and **G12.** In brief, the node grouping unit **111** classifies the receiving nodes 2 into the two destination groups **G11** and **G12** according as the number of priority subcarriers is less than or not less than the grouping threshold. For example, the two receiving nodes **204** and **205** having the number **N2** of priority subcarriers not less than the grouping threshold of "5" are classified into the destination group **G11.** Meanwhile, the eight receiving nodes **201** to **203** and **206** to **210** having the number **N2** of priority subcarriers less than the grouping threshold of "5" are classified into the destination group **G12.** In this manner, the destination groups **G11** and **G12** are created based on comparison of the number **N2** of priority subcarriers of each of the receiving nodes **201** to **210** with the grouping threshold of "5".

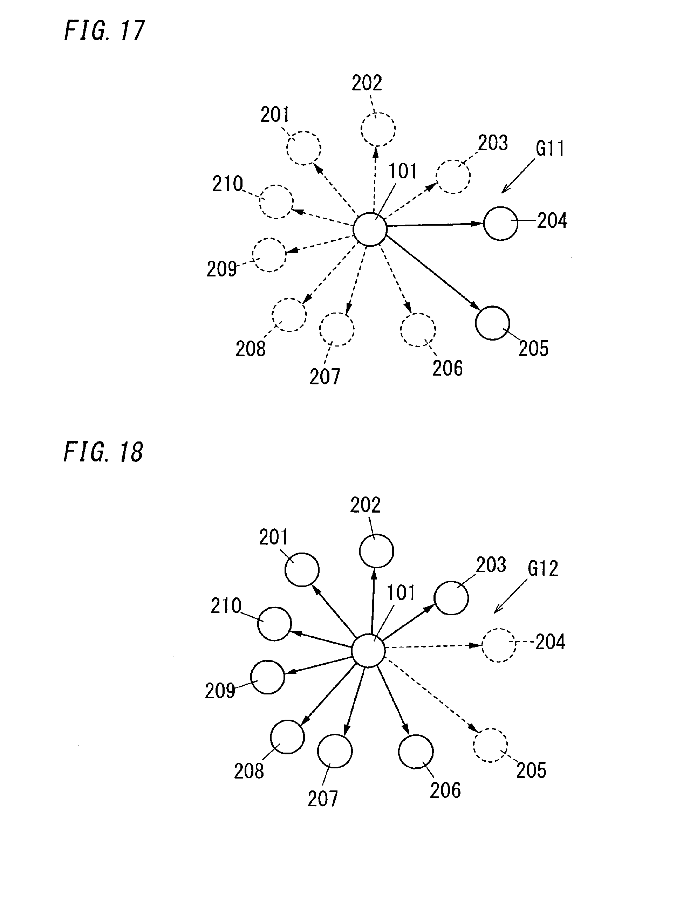

FIG. 17 shows the destination group **G11,** and the two receiving nodes **204** and 205 belong to the destination group **G11.** FIG. 18 shows the destination group **G12,** and the eight receiving nodes **201** to **203** and **206** to **210** belong to the destination group G12.

With regard to each of the destination groups **G11** and **G12,** the subcarrier selection unit **112** performs the allocation process of the shared subcarrier and the unshared subcarrier. Subsequently, the sending unit **12** sends the simultaneous broadcast data in the order from the destination group **G11** to the destination group G12. Note that, the sending order of the destination groups **G11** and **G12** may be from **G11** to G12 or from G12 to **G11**.

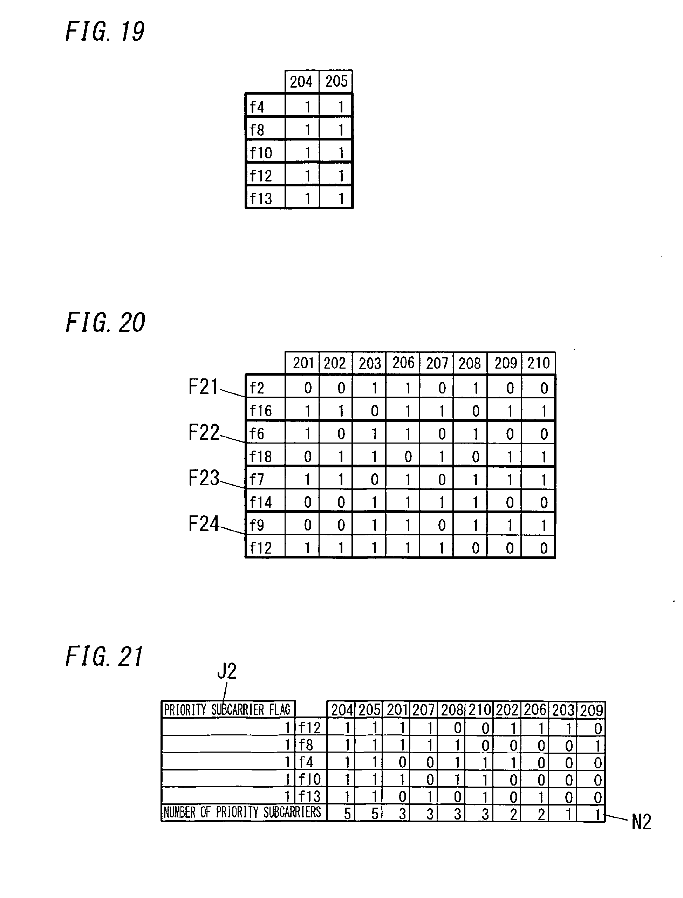

Consequently, the simultaneous broadcast data is sent to the destination group **G11** by use of the five shared subcarriers **f4, f8, f10, f12,** and **f13** shown in FIG. 19.

In contrast, the simultaneous broadcast data is sent to the destination group G12 by use of the four unshared subcarrier groups **F21** to **F24** shown in FIG. 20. The unshared subcarrier group **F21** is constituted by the two subcarriers **f2** and **f16,** the unshared subcarrier group **F22** is constituted by the two subcarriers **f6** and **f18,** and the unshared subcarrier group **F23** is constituted by the two subcarriers **f7** and **f14,** and the unshared subcarrier group **F24** is constituted by the two subcarriers **f9** and **f12**.

When each of the single shared subcarrier and the single unshared subcarrier group has a data rate of **1** bit per packet, the communication rate of the simultaneous broadcast of each of the destination groups **G11** and **G12** is shown below. With regard to the destination group **G11,** the five shared subcarriers **f4, f8, f10, f12,** and **f13** are used. Hence, the carrier number is "5", and the data rate is 5 bits per packet. With regard to the destination group **G12,** the four unshared subcarrier groups **F21** to **F24** are used. Hence, the carrier number is "4", and the data rate is 4 bits per packet.

As shown in FIG. **9****,** an accumulated sending period **T2** necessary to send the simultaneous broadcast data to all of the receiving nodes **201** to **210** is calculated by adding the inter-frame gap **Ip** to the sum of the sending periods **T21** and **T22** of the respective plural destination groups **G11** and **G12.** In FIG. 9, the inter-frame gap **Ip** is interposed between the sending period **T21** and the sending period **T22.** The sending period **T21** regarding the destination group **G11** is constituted by the header sending period **Th** and a body sending period **Ted21.** The sending period **T22** regarding the destination group **G12** is constituted by the header sending period **Th** of the header **Hp** and a sending period **Td22** of the data body **Dp.**

For example, the sending node **101** simultaneously broadcasts the simultaneous broadcast data of 800 bits (100 bytes). In this regard, since the data rate of the destination group **G11** is 5 bits per packet, the data body **Dp** sent to the destination group **G11** has 160 packets. Further, since the data rate of the destination group **G12** is 4 bits per packet, the data body **Dp** sent to the destination group **G12** has 200 packets. In brief, the accumulated sending period **T2** is expressed as **T2 = T21** + **T22 + Ti = Th + Td21** (160 packets) **+ Th + Td22** (200 packets) **+ Ti.**

As mentioned above, the communication system of the present embodiment is constituted by a plurality of nodes each configured to communicate with each other by use of the multicarrier modulation signal carried by a plurality of subcarriers. Each of the nodes constitutes either the sending node **101** for sending data or the receiving node **2** for receiving data. The sending node **101** includes the storage unit **14,** the node grouping unit **111,** the subcarrier selection unit **112,** and the sending unit **12.** The storage unit **14** stores the transmission path condition information **J1** indicative of the condition of the transmission path to each of the receiving nodes **2.** In the process of simultaneously broadcasting the simultaneous broadcast data to the plural receiving nodes **2,** the node grouping unit **111** performs the grouping of classifying the plural receiving nodes **2** into the two or more destination groups based on the transmission path condition information **J1**. The subcarrier selection unit **112** selects one or more subcarriers used for communication, based on the transmission path condition information **J1,** for each destination group. The sending unit **12** sends the simultaneous broadcast data for each destination group by use of the subcarrier selected for each destination group. The sending unit **12** adds, to the simultaneous broadcast data to be sent, the destination group information relating to the destination group selected as the destination.

In other words, the communication system of the present embodiment includes the plural receiving nodes **2** and the sending node **101** configured to send the simultaneous broadcast data to the plural receiving nodes **2.** The sending node **101** includes the sending unit **12,** the storage unit **14,** the node grouping unit **111,** and the subcarrier selection unit **112.** The sending unit **12** is configured to send the simultaneous broadcast data to the plural receiving nodes **2** by use of at least one of the plural subcarriers preliminarily prepared. The storage unit **14** is configured to store the transmission path condition information **J1** representing the condition of the transmission path for each of the receiving nodes 2. The node grouping unit **111** is configured to perform the grouping process of referring to the transmission path condition information **J1,** and classifying the plural receiving nodes **2** into the plural destination groups based on the classification criterion related to the condition of the transmission path, and creating the destination group set defined by the plural destination groups. The subcarrier selection unit **112** is configured to refer to the transmission path condition information **J1** and select, from the plural subcarriers, a subcarrier or subcarriers to send the simultaneous broadcast data to the receiving node **2** belonging to the destination group, for each of the destination groups of the destination group set. The sending unit **12** is configured to send the simultaneous broadcast data to each of the plural destination groups of the destination group set by use of the subcarrier or subcarriers selected by the subcarrier selection unit **112** in turn.

The condition of the transmission path indicates for each subcarrier whether or not the subcarrier is an effective subcarrier available for communication with the receiving node 2.

Further, in the communication system of the present embodiment, the node grouping unit **111** selects, as the effective subcarrier, the subcarrier allowing the sending node **101** to communicate with the receiving node **2** with reference to the transmission path condition information **J1,** for each receiving node **2.** The node grouping unit **111** selects the subcarrier available to communication with the receiving node **2** having the least number of effective subcarriers as the priority subcarrier. The node grouping unit **111** compares the number of priority subcarriers included in the effective subcarriers selected for each of the receiving nodes 2 with the grouping threshold, thereby performing the grouping of dividing the plural receiving nodes **2** into the two or more destination groups.

In other words, the node grouping unit **111** is configured to, in the grouping process, perform the selection process, the calculation process, the judgment process, and the classification process. In the selection process, the node grouping unit **111** selects the effective subcarrier of the receiving node 2 having the least number of effective subcarriers, as the priority subcarrier. In the calculation process, the node grouping unit **111** calculates the number of priority subcarriers included in the effective subcarriers of the receiving node, for each receiving node **2.** In the judgment process, the node grouping unit **111** judges whether or not the number of priority subcarriers is not less than the grouping threshold, for each receiving node **2.** In the classification process, the node grouping unit **111** classifies the receiving node **2** having the number of priority subcarriers not less than the grouping threshold into the destination group which is different from the destination group including the receiving nodes 2 having the number of priority subcarriers less than the grouping threshold.

Furthermore, in the communication system of the present embodiment, the node grouping unit **111** sets the grouping threshold to a predetermined value. In brief, the grouping threshold is a constant value.

Moreover, in the communication system of the present embodiment, the subcarrier selection unit **112** refers to the transmission path condition information **J1** and selects the shared subcarrier and the unshared subcarrier group for each destination group. The shared subcarrier is defined as the subcarrier enabling communication with all of the receiving nodes **2** belonging to the destination group. The unshared subcarrier group is constituted by the unshared subcarriers each defined as the subcarrier enabling communication with some of all of the receiving nodes **2** belonging to the destination group, so as to enable communication with all of the receiving nodes **2** belonging to the destination group by simultaneously using the plural unshared subcarriers. The sending unit **12** sends the simultaneous broadcast data for each destination group by use of the shared subcarrier and/or the unshared subcarrier group selected for each destination group.

In other words, the subcarrier selection unit **112** is configured to classify the plural subcarrier into the shared subcarrier(s) and the unshared subcarrier(s), for each of the destination groups of the destination group set. The shared subcarrier is defined as the subcarrier serving as the effective subcarrier to all of the receiving nodes **2** included in the destination group. The unshared subcarrier is defined as the subcarrier serving as the effective subcarrier to not all but at least one of the receiving nodes **2** included in the destination group. The subcarrier selection unit **112** is configured to create the subcarrier set for each of the destination groups of the destination group set. The subcarrier set includes at least one of the shared subcarrier and the unshared subcarrier set. The unshared subcarrier set is defined as a group of the plural unshared subcarriers selected so as to allow all of the receiving nodes **2** belonging to the destination group to receive the simultaneous broadcast data. The sending unit **12** is configured to send the simultaneous broadcast data by use of the subcarrier set created by the subcarrier selection unit **112,** for each of the destination groups of the destination group set.

As mentioned above, the communication system of the present embodiment performs the grouping of dividing all of the receiving nodes **201** to **210** selected as the destination for the simultaneous broadcast into the plural destination groups and sends the simultaneous broadcast data for each destination group. With performing the grouping of the receiving nodes **201** to **210,** in contrast to the prior case where the simultaneous broadcast data is simultaneously sent to all of the receiving nodes **201** to **210** selected as the destination, the accumulated sending period can be shortened in some cases. In brief, the accumulated sending period **T2** (see FIG. 9) is likely to be shorter than the accumulated sending period **T101** (see FIG. 10). Hence, in a situation where the simultaneous broadcast is performed by use of the multicarrier modulation method using the plural subcarriers, the communication efficiency can be improved.

Besides, in the grouping of creating the destination group, the grouping threshold used for the grouping is fixed to "5". Consequently, it is possible to facilitate the grouping process.

Note that, the grouping threshold may be set to the maximum of the numbers N2 of priority subcarriers of the respective receiving nodes **2.** In this arrangement, the grouping threshold can be selected according to changes in the conditions of the transmission paths of the respective receiving nodes **201** to **210.** Hence, the grouping can be performed appropriately.

### (SECOND EMBODIMENT)

The communication system of the present embodiment includes the same components as those of the first embodiment, the same components are designated by the same reference numerals and explanations thereof are deemed unnecessary.

In the present embodiment, the node grouping unit **111** performs the grouping multiple times. The node grouping unit **111** changes the grouping threshold each time the grouping for creation of the destination group is performed.

In brief, the node grouping unit **111** of the present embodiment performs a set of the judgment process and the classification process multiple times with varying the grouping threshold, after the selection process and the calculation process are performed. Thus, the node grouping unit **111** creates the plural destination group sets respectively corresponding to the mutual classification criteria (grouping conditions).

First, the node grouping unit **111** refers to the transmission path condition information **J1** (see FIG. 1), and performs calculation of the number **N1** of effective subcarriers, selection of the priority subcarriers, calculation of the number **N2** of priority subcarriers, sort of the subcarriers, and rearrangement of the receiving nodes **201** to **210.** As a result, the data shown in FIG. 21 is created based on the transmission path condition information **J1.**

Next, as shown in FIG. 21, the node grouping unit **111** compares each of the numbers N2 of priority subcarriers of the respective receiving nodes **201** to **210** with the grouping threshold, and creates the destination group based on the comparison results. In the present embodiment, the node grouping unit **111** performs multiple patterns of the grouping for creation of the destination group by use of the plural grouping threshold. The node grouping unit **111** selects the pattern of the grouping having the highest communication rate from the multiple patterns of the grouping. In other words, the node grouping unit **111** is configured to create the plural destination group sets by performing the plural grouping processes having the mutually different classification criteria (in the present embodiment, the grouping thresholds), and select one from the plural destination group sets according to a predetermined condition. The predetermined condition is that the accumulated sending period is the shortest. The accumulated sending period is defined as a period necessary to send the simultaneous broadcast data to all of the receiving nodes 2.

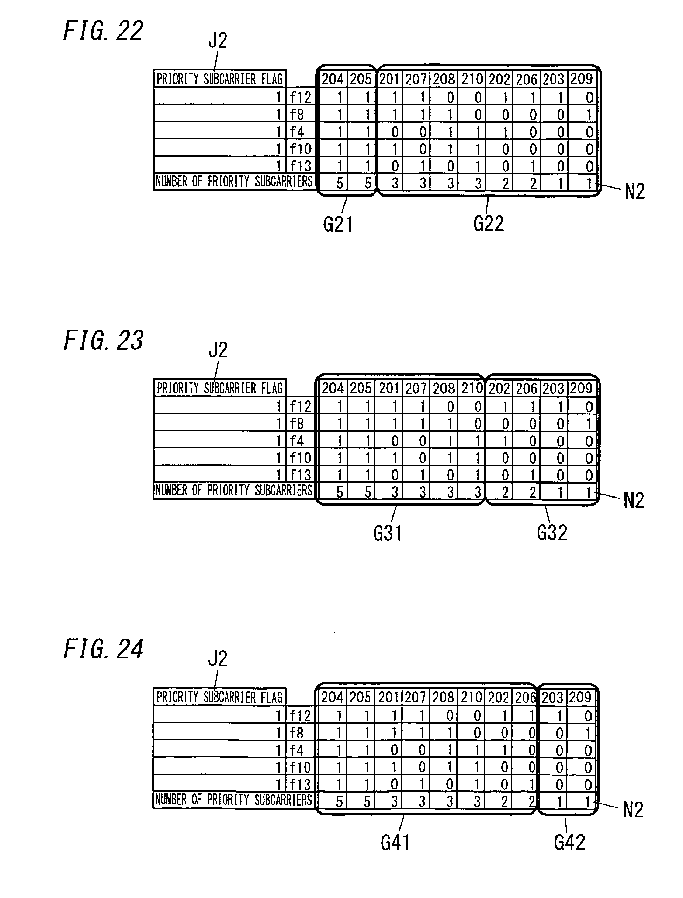

For example, as shown in FIG. 22, the node grouping unit **111** compares each of the numbers **N2** of priority subcarriers of the respective receiving nodes **201** to **210** with the grouping threshold of "5", and creates the destination groups **G21** and **G22** based on the comparison results. In brief, the node grouping unit **111** classifies the receiving node **2** having the number **N2** of priority subcarriers not less than the grouping threshold of "5" into the destination group **G21** and classifies the receiving node **2** having the number **N2** of priority subcarriers less than the grouping threshold of "5" into the destination group **G22.** In this manner, the node grouping unit **111** creates the destination group set G20 defined by the two destination groups **G21** and **G22.**

Next, as shown in FIG. 23, the node grouping unit **111** compares each of the numbers **N2** of priority subcarriers of the respective receiving nodes **201** to **210** with the grouping threshold of "3", and creates the destination groups **G31** and **G32** based on the comparison results. In this manner, the node grouping unit **111** creates the destination group set **G30** defined by the two destination groups G31 and G32.

Next, as shown in FIG. 24, the node grouping unit **111** compares each of the numbers **N2** of priority subcarriers of the respective receiving nodes **201** to **210** with the grouping threshold of "2", and creates the destination groups **G41** and **G42** based on the comparison results. In this manner, the node grouping unit **111** creates the destination group set **G40** defined by the two destination groups **G41** and **G42.**

Thereafter, the sending period calculation unit **114** calculates the accumulated sending period necessary to send the simultaneous broadcast data to all of the receiving nodes **201** to **210** for each of the three patterns of the grouping performed by use of the grouping thresholds of "5", "4", and "3" (the destination group sets **G20, G30,** and **G40).** In other words, the sending period calculation unit **114** is configured to calculate the accumulated sending period for each of the destination group sets. The node grouping unit **111** selects the pattern of the grouping corresponding to the highest communication rate (the shortest accumulated sending period).

The method for the grouping is not limited to the aforementioned method of dividing the receiving nodes **201** to **210** into the two destination groups by use of the single grouping threshold, but may be a method of dividing the receiving nodes **201** to **210** into the three or more destination groups by use of the plural grouping thresholds. In other words, the node grouping unit **111** may be configured to, in the classification process, classify the receiving node having the number of priority subcarriers included in a grouping range into the destination group which is different from the destination group including the receiving node having the number of priority subcarriers not included in the grouping range. In the following case, the three grouping ranges are defined by the two grouping thresholds of "3" and "2". The first grouping range is defined as a range of the grouping threshold having a lower limit of "3". The second grouping range is defined as a range of the grouping threshold having an upper limit less than "3" and a lower limit of "2". The third grouping range is defined as a range of the grouping threshold having an upper limit less than "2".

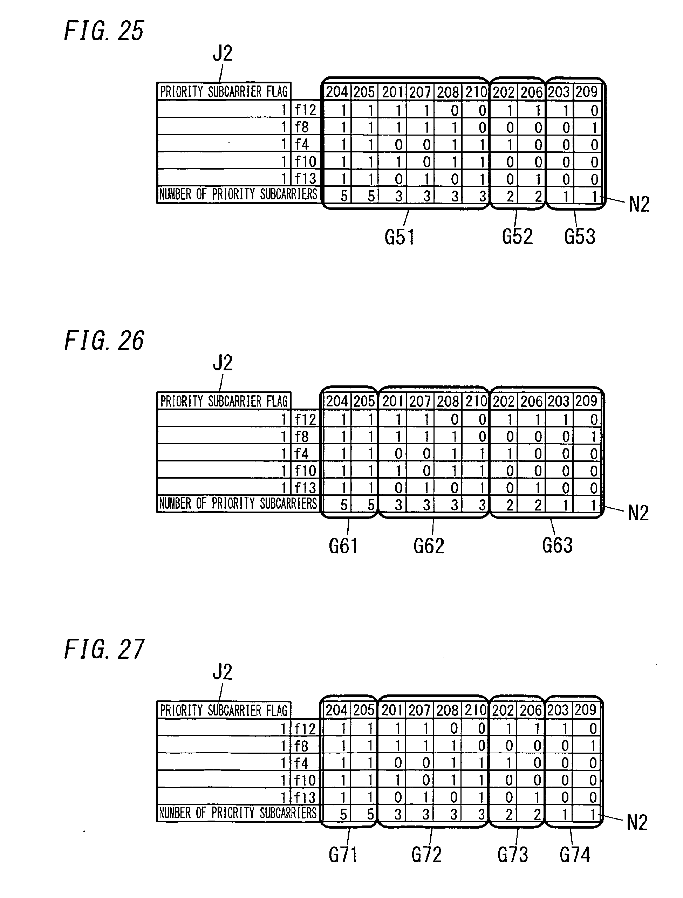

For example, as shown in FIG. 25, the node grouping unit **111** compares each of the numbers **N2** of priority subcarriers of the respective receiving nodes **201** to **210** with the two grouping thresholds of "3" and "2", and creates the destination groups **G51, G52,** and **G53** based on the comparison results. In brief, the node grouping unit **111** classifies the receiving node 2 having the number **N2** of priority subcarriers not less than the grouping threshold of "3" into the destination group **G51** and classifies the receiving node **2** having the number **N2** of priority subcarriers less than the grouping threshold of "3" and not less than the grouping threshold of **"2"** into the destination group **G52,** and classifies the receiving node **2** having the number **N2** of priority subcarriers less than the grouping threshold of **"2"** into the destination group **G53.** In this manner, the node grouping unit **111** creates the destination group set **G50** defined by the three destination groups **G51, G52,** and **G53.**

Next, as shown in FIG. 26, the node grouping unit **111** compares each of the numbers **N2** of priority subcarriers of the respective receiving nodes **201** to **210** with the two grouping thresholds of "5" and "3", and creates the destination groups **G61, G62,** and G63 based on the comparison results. In this manner, the node grouping unit **111** creates the destination group set **G60** defined by the three destination groups **G61, G62,** and **G63.**

Next, as shown in FIG. 27, the node grouping unit **111** compares each of the numbers **N2** of priority subcarriers of the respective receiving nodes **201** to **210** with the three grouping thresholds of "5", "3" and "2", and creates the destination groups **G71** to **G74** based on the comparison results. In this manner, the node grouping unit **111** creates the destination group set **G70** defined by the three destination groups **G71,** G72, and G73.

Thereafter, the sending period calculation unit **114** calculates the accumulated sending period necessary to send the simultaneous broadcast data to all of the receiving nodes **201** to **210** for each of the three patterns of the grouping performed by use of the multiple grouping thresholds (the destination group sets **G50, G60,** and G70). The node grouping unit **111** selects the pattern of the grouping corresponding to the highest communication rate (the shortest accumulated sending period).

Note that, the node grouping unit **111** may select the pattern of the grouping corresponding to the highest communication rate (the shortest accumulated sending period) from a total of the six patterns of the groupings (the destination group set **G20, G30, G40, G50, G60, G70)** respectively shown in FIGS. 22 to 24 and 25 to 27.

For example, the node grouping unit **111** performs the first grouping to form the destination groups **G1 and G2** (the first destination group set defined by the destination groups **G1 and G2)** respectively illustrated in FIGS. 4 and 5, and performs the second grouping to form the destination groups **G11** and **G12** (the second destination group set defined by the destination groups **G11** and **G12)** respectively illustrated in FIGS. 17 and 18.

As for the first grouping for forming the destination groups **G1** and **G2** (the first destination group set), as shown in FIG. 8, the communication rate at the simultaneous broadcast depends on the accumulated sending period **T1** = **T11** + **T12** + **Ti** = **Th** + **Td11** (160 packets) + **Th** + **Td12** (134 packets) + **Ti.**

As for the second grouping for forming the destination groups **G11** and **G12** (the second destination group set), as shown in FIG. 9, the communication rate at the simultaneous broadcast depends on the accumulated sending period **T2** = **T21** + **T22** + **Ti** = **Th** + **Td21** (160 packets) + **Th** + **Td22** (200 packets) + **Ti.**

The node grouping unit **111** compares the accumulated sending period **T1** of the first grouping for forming the destination groups **G1** and **G2** with the accumulated sending period **T2** of the second grouping for forming the destination groups **G11** and **G12,** and selects the grouping corresponding to the shorter sending period. In this example, the accumulated sending period **T1** is shorter than the accumulated sending period **T2.** The node grouping unit **111** selects the first grouping for forming the destination groups **G1 and G2.** In other words, the node grouping unit **111** selects the first destination group set.

As mentioned above, in the communication system of the present embodiment, the node grouping unit **111** performs the grouping multiple times and uses the grouping thresholds selected for the respective grouping in the respective grouping.

In other words, the node grouping unit **111** is configured to create the plural destination group sets by performing the plural grouping processes having the mutually different grouping thresholds (i.e., by repeating the grouping process with changing the grouping threshold), and select one from the plural destination group sets according to the predetermined condition.

Further, in the communication system of the present embodiment, the sending node **101** includes the sending period calculation unit **114** configured to calculate the sending period necessary for transmission of data. The node grouping unit **111** perform the grouping multiple times. With regard to each of the groups created through performing the grouping multiple times, the sending period calculation unit **114** calculates the accumulated sending period defined as the sum of the sending periods for the simultaneous broadcast data of the respective destination groups. The node grouping unit **111** selects one group corresponding to the shortest accumulated sending period for the simultaneous broadcast data from the groups created through performing the grouping multiple times.

In other words, the sending node **101** further includes the sending period calculation unit **114.** The node grouping unit 111 is configured to create the plural destination group sets by performing the plural grouping processes having the mutually different classification criteria, and select one from the plural destination group sets according to the predetermined condition. The sending period calculation unit **114** is configured to calculate the accumulated sending period necessary to send the simultaneous broadcast data to all of the receiving nodes **2,** for each of the destination group sets. The predetermined condition is that the accumulated sending period is the shortest.

Especially, in the communication system of the present embodiment, the sending node **101** includes the sending period calculation unit **114** configured to calculate the sending period necessary for transmission of data. The node grouping unit **111** perform the grouping multiple times. With regard to each of the groups created through performing the grouping multiple times, the sending period calculation unit **114** calculates the carrier number defined as the sum of the number of shared subcarriers and the number of unshared subcarrier groups selected for the destination group, and calculates the sending period for the simultaneous broadcast data based on the calculated subcarrier number for each destination group, and calculates the accumulated sending period defined as the sum of the sending periods of the respective destination groups. The node grouping unit **111** selects one group corresponding to the shortest accumulated sending period from the groups created through performing the grouping multiple times.

In other words, the sending node **101** further includes the sending period calculation unit **114.** The node grouping unit **111** is configured to create the plural destination group sets by performing the plural grouping processes having the mutually different classification criteria and select one from the plural destination group sets according to the predetermined condition. The subcarrier selection unit **112** is configured to create the subcarrier set for each of the destination groups with regard to each of the plural destination group sets created by the node grouping unit **111.** The sending period calculation unit **114** is configured to calculate the carrier number indicative of the sum of the number of shared subcarriers and the number of unshared subcarrier sets with regard to the subcarrier set, for each of the destination group, and calculate the accumulated sending period based on the carrier number, for each of the destination group sets. The accumulated sending period is defined as the time necessary to send the simultaneous broadcast data to all of the receiving nodes **2.** The predetermined condition is that the accumulated sending period is the shortest.

Moreover, in the communication system of the present embodiment, the sending period calculation unit **114** calculates the accumulated sending period by adding the interval period necessary to switch the destination group selected as the destination of the simultaneous broadcast data to the sum of the sending periods of the respective destination groups.

In other words, the sending unit **12** is configured to, after the passage of the predetermined interval period from time of sending the simultaneous broadcast data to the destination group, send the simultaneous broadcast data to the next destination group. The sending period calculation unit **114** is configured to calculate the sending period necessary to send the simultaneous broadcast data to all of the receiving nodes **2** belonging to the destination group, for each of the destination groups of the destination group, and calculate the accumulated sending period of the destination group set by adding the sum of the sending periods of the respective plural destination groups of the destination group set to the total of the interval periods. Note that, the destination group set includes the two destination groups, the total of the interval periods is equal to the single interval period.

As mentioned above, in the present embodiment, the node grouping unit **111** performs the grouping multiple times while changing the grouping threshold each time the grouping for creation of the destination group is performed. The accumulated sending period necessary for the simultaneous broadcast to all of the receiving nodes **201** to **210** is calculated for each of the plural patterns of the grouping. The pattern of the grouping corresponding to the highest communication rate (the shortest accumulated sending period) is selected.

Consequently, with selecting the optimal grouping corresponding to the shortest accumulated sending period for the simultaneous broadcast, the communication rate at the simultaneous broadcast can be more increased. Hence, in a situation where the simultaneous broadcast is performed by use of the multicarrier modulation method using the plural subcarriers, the communication efficiency can be improved.

Note that, the grouping based on the grouping threshold in the present embodiment is only an example. The grouping using the grouping threshold different from the above example can be adopted.

### (THIRD EMBODIMENT)

The communication system of the present embodiment includes the same components as those of the first or second embodiment, the same components are designated by the same reference numerals and explanations thereof are deemed unnecessary.

In the present embodiment, a detailed explanation is made to a process in which, in the process of the grouping of creating the destination groups, the node grouping unit **111** uses the plural grouping thresholds to classify the receiving nodes **201** to **210** into the three or more destination groups.

The node grouping unit **111** performs: the selection process of selecting the effective subcarrier of the receiving node **2** having the least number of effective subcarriers, as the priority subcarrier; the calculation process of calculating the number of priority subcarriers included in the effective subcarriers of the receiving node **2,** for each receiving node **2;** the judgment process of judging whether or not the number of priority subcarriers is not less than the grouping threshold, for each receiving node **2;** and the classification process of classifying the receiving node **2** having the number of priority subcarriers not less than the grouping threshold into the destination group which is different from the destination group including the receiving node **2** having the number of priority subcarriers less than the grouping threshold. Further, the node grouping unit **111** is configured to, in the classification process, classify the receiving nodes having the number of priority subcarriers not less than the grouping threshold into the same destination group. Furthermore, the node grouping unit **111** is configured to, after the classification process, perform the selection process and the calculation process with regard to the receiving nodes having the number of priority subcarriers less than the grouping threshold, and subsequently perform the judgment process by use of the grouping threshold less than the grouping threshold of the previous judgment process.

In brief, the node grouping unit **111** of the present embodiment is configured to perform multiple separation processes defined by a combination of the selection process, the calculation process, the judgment process, and the classification process to create the destination group set defined by the three or more destination groups.

The following explanation is made to a case where the separation process is performed three times.

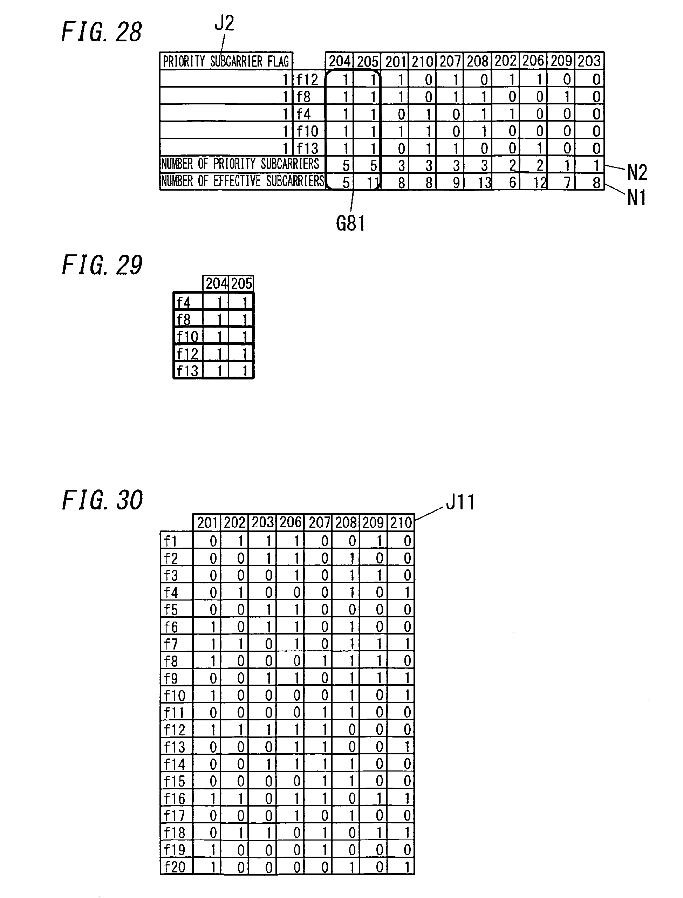

First, the node grouping unit **111** refers to the transmission path condition information **J1** (see FIG. 3), and performs calculation of the number **N1** of effective subcarriers, selection of the priority subcarriers, calculation of the number **N2** of priority subcarriers, sort of the subcarriers, and rearrangement of the receiving nodes **201** to **210.** As a result, the data shown in FIG. 28 is created based on the transmission path condition information **J1**. Note that, the data shown in FIG. 28 is different from the data shown in FIG. 21 in that the receiving nodes **2** having the same number **N2** of priority subcarriers are rearranged in ascending order of the number **N1** of effective subcarriers.

Thereafter, the node grouping unit **111** compares each of the numbers **N2** of priority subcarriers of the respective receiving nodes **201** to **210** with the grouping threshold of "5", and creates the destination group **G81** (the receiving nodes **204** and **205)** based on the comparison results. As shown in FIG. 29, the simultaneous broadcast data is sent to the destination group G81 by use of the five shared subcarriers **f4, f8, f10, f12,** and **f13**.

In brief, the node grouping unit **111** performs the first round of the separation processes with regard to all of the receiving nodes **2 (201** to **210).** The grouping threshold of the judgment process in the first round of the separation processes is **"5".** In the classification process, the destination group (first destination process) **G81** having the number of priority subcarriers not less than "5", and the destination group (second destination process) having the number of priority subcarriers less than **"5"** are created. The first destination group **G81** created through the first round of the separation processes includes the two receiving nodes **204** and **205,** and the second destination group created through the first round of the separation processes includes the eight receiving nodes **201** to **203** and **206** to **210.**

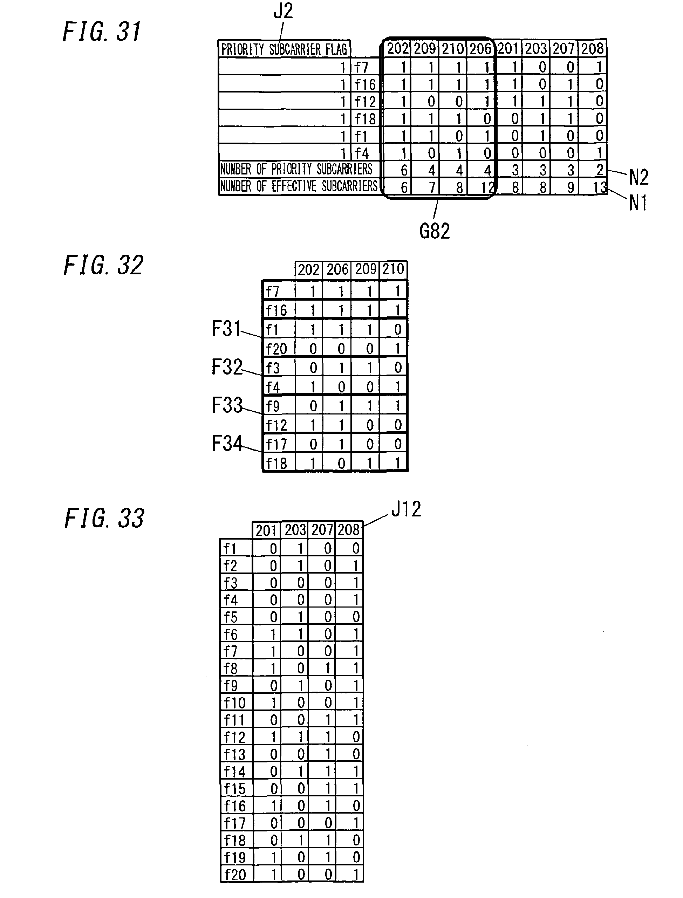

Next, the node grouping unit 111 eliminates, from the transmission path condition information **J1** (see FIG. 3), the information of the receiving nodes **204** and **205** which have already been included in the destination group **G81,** to create the transmission path condition information **J11** (see FIG. 30). Thereafter, with reference to the transmission path condition information **J11**, the node grouping unit **111** performs calculation of the number **N1** of effective subcarriers, selection of the priority subcarriers, calculation of the number **N2** of priority subcarriers, sort of the subcarriers, and rearrangement of the receiving nodes **201** to **203** and **206** to **210.** FIG. 31 shows a result of the aforementioned process.

After that, the node grouping unit **111** compares each of the numbers **N2** of priority subcarriers of the respective receiving nodes **201** to **203** and **206** to **210** with the grouping threshold of "4", and creates the destination group **G82** (the receiving nodes **202, 206, 209** and **210)** based on the comparison results. As shown in FIG. 32, the simultaneous broadcast data is sent to the destination group **G82** by use of the two shared subcarriers **f7** and **f16** and the four unshared subcarrier groups F31 to **F34.**

The node grouping unit **111** performs the second or subsequent rounds of the separation processes with regard to the second destination group created through the previous separation process. In brief, the node grouping unit **111** performs the second round of the separation processes with regard to the second destination group (the eight receiving nodes **201** to **203** and **206** to **210)** created through the first round of the separation processes. The grouping threshold of the judgment process in the second round of the separation processes is **"4".** In the classification process, the destination group (first destination process) **G82** having the number of priority subcarriers not less than "4", and the destination group (second destination process) having the number of priority subcarriers less than "4" are created. The first destination group **G82** created through the second round of the separation processes includes the four receiving nodes **202, 206, 209** and **210,** and the second destination group created through the second round of the separation processes includes the four receiving nodes **201, 203, 207** and **208.**

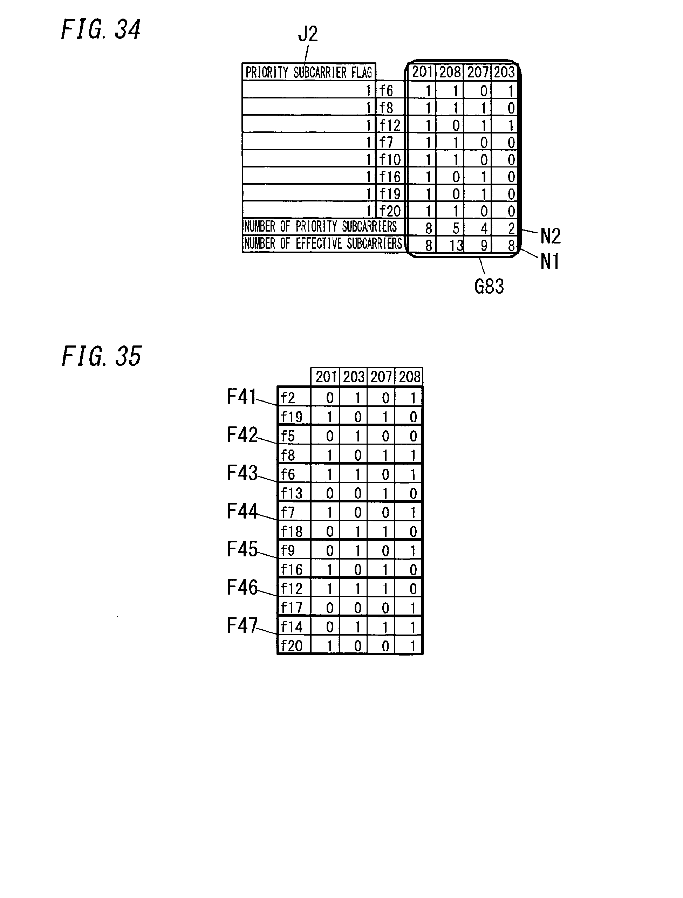

Next, the node grouping unit **111** eliminates, from the transmission path condition information **J11** (see FIG. 30), the information of the receiving nodes **202, 206, 209** and **210** which have already been included in the destination group **G82,** to create the transmission path condition information **J12** (see FIG. 33). Thereafter, with reference to the transmission path condition information **J12,** the node grouping unit **111** performs calculation of the number **N1** of effective subcarriers, selection of the priority subcarriers, calculation of the number N2 of priority subcarriers, sort of the subcarriers, and rearrangement of the receiving nodes **201, 203, 207** and **208.** FIG. 34 shows a result of the aforementioned process.

After that, the node grouping unit **111** compares each of the numbers **N2** of priority subcarriers of the respective receiving nodes **201, 203, 207** and **208** with the grouping threshold of **"2",** and creates the destination group **G83** (the receiving nodes **201, 203, 207** and **208)** based on the comparison results. As shown in FIG. 35, the simultaneous broadcast data is sent to the destination group G83 by use of the seven unshared subcarrier groups **F41** to **F47.**

The node grouping unit **111** performs the second or subsequent round of the separation processes with regard to the second destination group created through the previous separation process. In brief, the node grouping unit **111** performs the third round of the separation processes with regard to the second destination group (the eight receiving nodes **201, 203, 207** and **208)** created through the second round of the separation processes. The grouping threshold of the judgment process in the third round of the separation processes is "2". In the classification process, the destination group (first destination process) **G83** having the number of priority subcarriers not less than **"2",** and the destination group (second destination process) having the number of priority subcarriers less than "2" are created. The first destination group **G83** created through the third round of the separation processes includes the four receiving nodes **201, 203, 207** and **208,** and the second destination group created through the third round of the separation processes includes no receiving nodes **2.** As a result, in the third round of the separation processes, the second destination group is not created.

In this manner, the node grouping unit **111** creates the destination group set including the three destination groups **G81, G82** and **G83.**

When each of the single shared subcarrier and the single unshared subcarrier group has a data rate of 1 bit per packet, the communication rate of the simultaneous broadcast of each of the destination groups **G81** to **83** is shown below. With regard to the destination group **G81,** the five shared subcarriers **f4, f8, f10, f12** and **f13** are used. Hence, the carrier number is "5", and the data rate is 5 bits per packet. With regard to the destination group **G82,** the two shared subcarriers **f7** and **f16** and the four unshared subcarrier groups **F31** to **F34** are used. Hence, the carrier number is "6", and the data rate is 6 bits per packet. With regard to the destination group **G83,** the seven unshared subcarrier groups **F41** to **F47** are used. Hence, the carrier number is "7", and the data rate is 7 bits per packet.

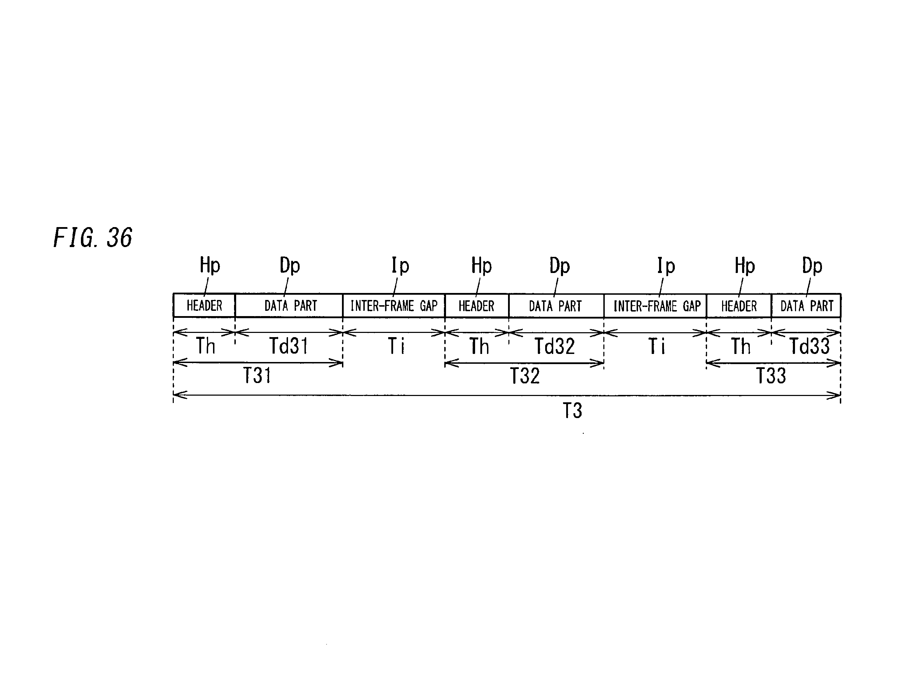

As shown in FIG. 36 the accumulated sending period **T3** necessary to send the simultaneous broadcast data to all of the receiving nodes **201** to **210** is calculated by adding the inter-frame gap **Ip** to the sum of the sending periods **T31, T32** and **T33** of the respective plural destination groups **G81, G82** and **G83.** In FIG. 36, the inter-frame gap **Ip** is interposed between the sending period **T31** and the sending period **T32** as well as between the sending period **T32** and the sending period **T33.** The sending period **T31** for the destination group **G81** is constituted by the header sending period **Th** and a body sending period **Td31.** The sending period **T32** for the destination group **G82** is constituted by the header sending period **Th** and a body sending period **Td32.** The sending period **T33** for the destination group G83 is constituted by the header sending period Th and a body sending period **Td33.**

For example, the sending node **101** simultaneously broadcasts the simultaneous broadcast data of 800 bits (100 bytes). In this regard, since the data rate of the destination group **G81** is 5 bits per packet, the data body **Dp** sent to the destination group **G1** has 160 packets. Further, since the data rate of the destination group **G82** is 6 bits per packet, the data body **Dp** sent to the destination group **G82** has **134** packets. Furthermore, since the data rate of the destination group **G83** is 7 bits per packet, the data body **Dp** sent to the destination group **G83** has **115** packets. In brief, the accumulated sending period **T3** is expressed as **T3** = **T31** + **T32** + **T33** + **2** * **Ti** = **Th** + **Td31** (160 packets) + **Th** + **Td32** (134 packets) + **Th** + **Td33** (115 packets) + 2* Ti.

As mentioned above, in the communication system of the present embodiment, the node grouping unit **111** performs grouping of classifying, into the same destination group, the receiving nodes **2** which are included in the plural receiving nodes **2** and have the number of priority subcarriers included in the effective subcarriers not less than the grouping threshold, and performs the grouping one or more times with regard to the remaining receiving nodes **2** not belonging to the above same destination group.

In other words, according to the present embodiment, the node grouping unit **111** is configured to perform the multiple separation processes defined by a combination of the selection process, the calculation process, the judgment process, and the classification process to create the destination group set defined by the three or more destination groups. The node grouping unit **111** is configured to, in the classification process, create the first destination group with the number of priority subcarriers not less than the grouping threshold and the second destination group with the number of priority subcarriers less than the grouping threshold. The node grouping unit **111** is configured to perform the first round of the separation processes with regard to all of the receiving nodes, and perform the second or subsequent rounds of the separation processes with regard to the second destination group created through the previous separation process.

As mentioned in the above, in the present embodiment, to create the destination groups **G81** to **G83** through the process of the grouping for creating the destination group, the node grouping unit **111** uses the grouping thresholds respectively peculiar to the grouping and divides the receiving nodes **201** to **210** into the three or more destination groups. In other words, the node grouping unit **111** performs the grouping of classifying, into the same destination group, the receiving nodes **2** which are included in the plural receiving nodes **2** and have the number **N2** of priority subcarriers included in the effective subcarriers not less than the grouping threshold. Additionally, the node grouping unit **111** performs the grouping one or more times with regard to the remaining receiving nodes **2** not belonging to the above same destination group.

Consequently, since the receiving nodes **201** to **210** selected as the destination of the simultaneous broadcast data are divided into the three or more destination groups, it is possible to select the optimal group enabling the accumulated sending period for the simultaneous broadcast to be shorter. In other words, the communication rate at the simultaneous broadcast can be more increased. Hence, in a case where the simultaneous broadcast is performed by use of the multicarrier modulation method using the plural subcarriers, it is possible to improve the communication efficiency.

### (FOURTH EMBODIMENT)

The communication system of the present embodiment includes the same components as those of any one of the first to third embodiments, the same components are designated by the same reference numerals and explanations thereof are deemed unnecessary.

In the present embodiment, as for the grouping for creating the destination group, the receiving nodes which have the same number **N2** of priority subcarriers not less than the grouping threshold are referred to as boundary receiving nodes **2.** For example, when the grouping threshold is "3" and when there are plural receiving nodes **2** having the number **N2** of priority subcarriers equal to "3", these receiving nodes **2** are treated as the boundary receiving nodes **2.** When the grouping threshold is "3" and when there are no boundary receiving nodes **2** having the number **N2** of priority subcarriers equal to "3", the plural receiving nodes **2** having the least number **N2** of priority subcarriers out of the receiving nodes **2** having the number **N2** of priority subcarriers greater than "3" are treated as the boundary receiving nodes 2. For example, when there are plural receiving nodes **2** having the number **N2** of priority subcarriers equal to **"4",** these receiving nodes **2** are treated as the boundary receiving nodes **2.** In brief, with regard to the receiving nodes 2 having the number N2 of priority subcarriers not less than the grouping threshold, when there are plural boundary receiving node candidates having the mutually different numbers **N2** of priority subcarriers, the boundary receiving node candidates having the least number **N2** of priority subcarriers are selected.

The present embodiment is characterized in that the grouping is performed multiple times by means of sequentially classifying one of combinations choosing at least one from boundary receiving nodes **2** selected in accordance with the aforementioned manner into the same destination group.

In other words, in the classification process in accordance with the present embodiment, the node grouping unit **111** judges whether or not plural boundary receiving nodes exist. Upon concluding that the plural boundary receiving nodes 2 exist, the node grouping unit **111** creates the plural destination group sets based on a combination of the plural boundary receiving nodes and the receiving nodes **2** having the number of priority subcarriers greater than the number of priority subcarriers of the boundary receiving nodes. The boundary receiving node is defined as the receiving node 2 having the least number of priority subcarriers out of the receiving nodes **2** having the number of priority subcarriers not less than the grouping threshold.

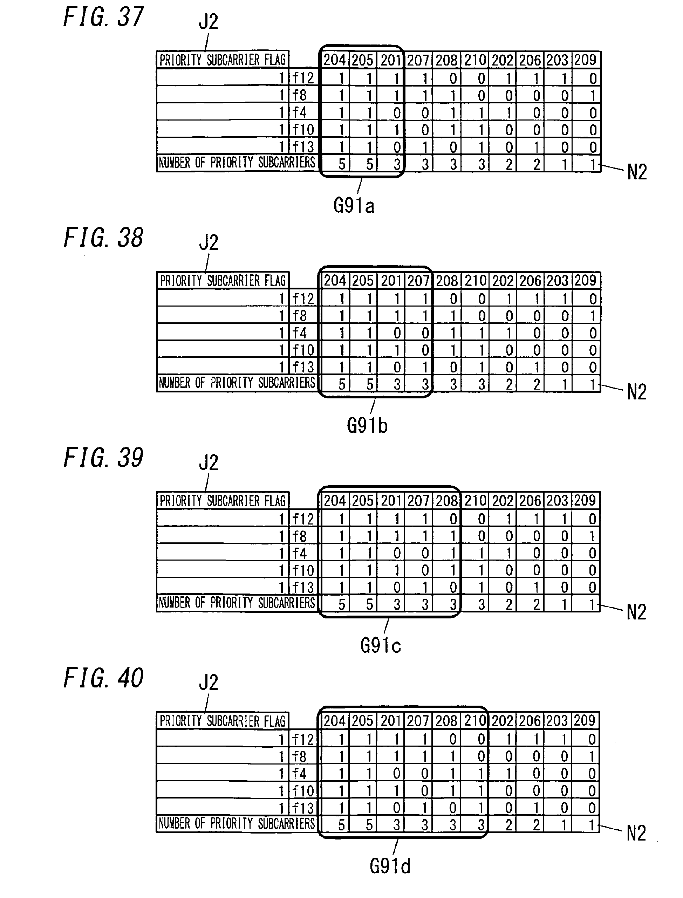

Next, the grouping process of the present embodiment is explained in detail with reference to FIGS. **37** to **40****.**

First, the node grouping unit **111** refers to the transmission path condition information **J1** (see FIG. 3), and performs calculation of the number **N1** of effective subcarriers, selection of the priority subcarriers, calculation of the number **N2** of priority subcarriers, sort of the subcarriers, and rearrangement of the receiving nodes **201** to **210.** As a result, the data shown in FIG. 21 is created based on the transmission path condition information **J1.**

Next, the node grouping unit **111** compares each of the numbers **N2** of priority subcarriers of the respective receiving nodes **201** to **210** with the grouping threshold of **"3",** and classifies the receiving nodes **2** having the number **N2** of priority subcarriers not less than "3" into the destination group **G91.**

In this regard, the receiving nodes **201, 207, 208,** and **210** having the number **N2** of priority subcarriers equal to "3" are treated as the boundary receiving nodes **2** (hereinafter referred to as the boundary receiving nodes **201, 207, 208,** and **210).** Hence, the node group unit **111** sequentially classifies one of combinations of the boundary receiving nodes **2** into the destination group **G91.**

First, as shown in FIG. 37, the node grouping unit **111** classifies only the boundary receiving node **201** into the destination group **G91a** in addition to the receiving nodes **204** and **205** having the number **N2** of priority subcarriers equal to "5". Note that, the remaining boundary receiving nodes **207, 208,** and **210** are classified into another destination group. For example, the node grouping unit **111** creates the destination group set defined by the destination group **G91a** including the three receiving nodes **201, 204,** and **205,** and the destination group including the seven receiving nodes **202, 203, 206, 207, 208, 209,** and **210.**

Next, as shown in FIG. 38, the node grouping unit **111** classifies only the boundary receiving nodes **201** and **207** into the destination group **G91b** in addition to the receiving nodes **204** and **205** having the number **N2** of priority subcarriers equal to "5". Note that, the remaining boundary receiving nodes **208** and **210** are classified into another destination group. For example, the node grouping unit **111** creates the destination group set defined by the destination group **G91b** including the four receiving nodes **201, 204, 205,** and **207,** and the destination group including the six receiving nodes **202, 203, 206, 208, 209,** and **210.**

Next, as shown in FIG. 39, the node grouping unit **111** classifies only the boundary receiving nodes **201, 207,** and **208** into the destination group **G91c** in addition to the receiving nodes **204** and **205** having the number **N2** of priority subcarriers equal to "5". Note that, the remaining boundary receiving node **210** is classified into another destination group. For example, the node grouping unit **111** creates the destination group set defined by the destination group **G91c** including the five receiving nodes **201, 204, 205, 207,** and **208,** and the destination group including the five receiving nodes **202, 203, 206, 209,** and **210.**

Next, as shown in FIG. 40, the node grouping unit **111** classifies all the boundary receiving nodes **201, 207, 208** and **210** into the destination group **G91d** in addition to the receiving nodes **204** and **205** having the number **N2** of priority subcarriers equal to "5". For example, the node grouping unit **111** creates the destination group set defined by the destination group **G91d** including the six receiving nodes **201, 204, 205, 207, 208,** and **210,** and the destination group including the four receiving nodes **202, 203, 206,** and **209.**

Note that, the boundary receiving node may be classified into the destination group different from the destination group including the receiving node **2** classified by the grouping threshold less than "3".

For example, as for the case shown in FIG. 37, the node grouping unit **111** may create the destination group set defined by the destination group **G91a** including the three receiving nodes **201, 204,** and **205,** the destination group including the remaining three boundary receiving nodes **207, 208,** and **210,** and the destination group including the four receiving nodes **202, 203, 206,** and **209** classified by the grouping threshold less than **"3".**

Further, as for the case shown in FIG. 38, the node grouping unit **111** may create the destination group set defined by the destination group **G91b** including the four receiving nodes **201, 204, 205,** and **207,** the destination group including the remaining two boundary receiving nodes **208** and **210,** and the destination group including the four receiving nodes **202, 203, 206,** and **209** classified by the grouping threshold less than "3".

Furthermore, as for the case shown in FIG. 39, the node grouping unit **111** may create the destination group set defined by the destination group **G91c** including the five receiving nodes **201, 204, 205, 207,** and **208,** the destination group including the remaining one boundary receiving node **210,** and the destination group including the four receiving nodes **202, 203, 206,** and **209** classified by the grouping threshold less than "3".

The node grouping unit **111** selects, from groups of the respective four patterns of the grouping shown in FIGS. 37 to 40, the group of the pattern corresponding to the shortest accumulated sending period necessary for the simultaneous broadcast to all of the receiving nodes **201** to **210.** In brief, the node grouping unit **111** selects the destination group set corresponding to the shortest accumulated sending period from the aforementioned four destination group sets.

As mentioned above, in the communication system of the present embodiment, the node grouping unit **111** performs grouping of classifying, into the same destination group, the receiving nodes **2** which are included in the plural receiving nodes **2** and have the number of priority subcarriers included in the effective subcarriers not less than the grouping threshold. With regard to the receiving nodes **2** having the number of priority subcarriers not less than the grouping threshold, when the there are plural boundary receiving nodes which are the plural receiving nodes **2** having the same number of priority subcarriers, the node grouping unit **111** sequentially selects one of combinations choosing at least one from the boundary receiving nodes as the boundary receiving node allocated to the above same destination group, thereby performing the grouping multiple times.

In other words, in the present embodiment, the node grouping unit **111** is configured to, in the grouping process, the selection process, the calculation process, the judgment process, and the classification process. In the selection process, the node grouping unit **111** selects the effective subcarrier of the receiving node having the least number of effective subcarriers, as the priority subcarrier. In the calculation process, the node grouping unit **111** calculates the number of priority subcarriers included in the effective subcarriers of the receiving node 2, for each receiving node **2.** In the judgment process, the node grouping unit **111** judges whether or not the number of priority subcarriers is not less than the grouping threshold, for each receiving node **2.** In the classification process, the node grouping unit **111** judges whether or not plural boundary receiving nodes each defined as the receiving node having the least number of priority subcarriers out of the receiving nodes 2 having the number of priority subcarriers not less than the grouping threshold exist, and, upon concluding that the plural boundary receiving nodes exist, creates the plural destination group sets based on a combination of the plural boundary receiving nodes and the receiving node having the number of priority subcarriers greater than the number of priority subcarriers of the boundary receiving nodes.

As mentioned above, in the present embodiment, in grouping for creation of the destination group, to perform grouping multiple times, the node grouping unit **111** sequentially classifies one of combinations choosing at least one from the plural boundary-receiving nodes **2** into the destination group.

Consequently, it is possible to select, from results obtained by performing the grouping multiple times, the result of the optimal grouping corresponding to the shortest accumulated sending period at the simultaneous broadcast. In brief, the communication rate at the simultaneous broadcast can be more increased. Hence, in a case where the simultaneous broadcast is performed by use of the multicarrier modulation method using the plural subcarriers, it is possible to improve the communication efficiency.

Further, the node grouping unit may perform grouping of preferentially classifying the boundary receiving node having the less number of effective subcarriers out of the plural boundary receiving nodes into the same (prescribed) destination group.

In other words, the node grouping unit **111** may be configured to, in the classification process, classify the boundary receiving node(s) having the less number of effective subcarriers out of the plural boundary receiving nodes into the same destination group that includes the receiving nodes having the number of priority subcarriers greater than that of the boundary receiving node, in priority to the boundary receiving node having the greater number of effective subcarriers.

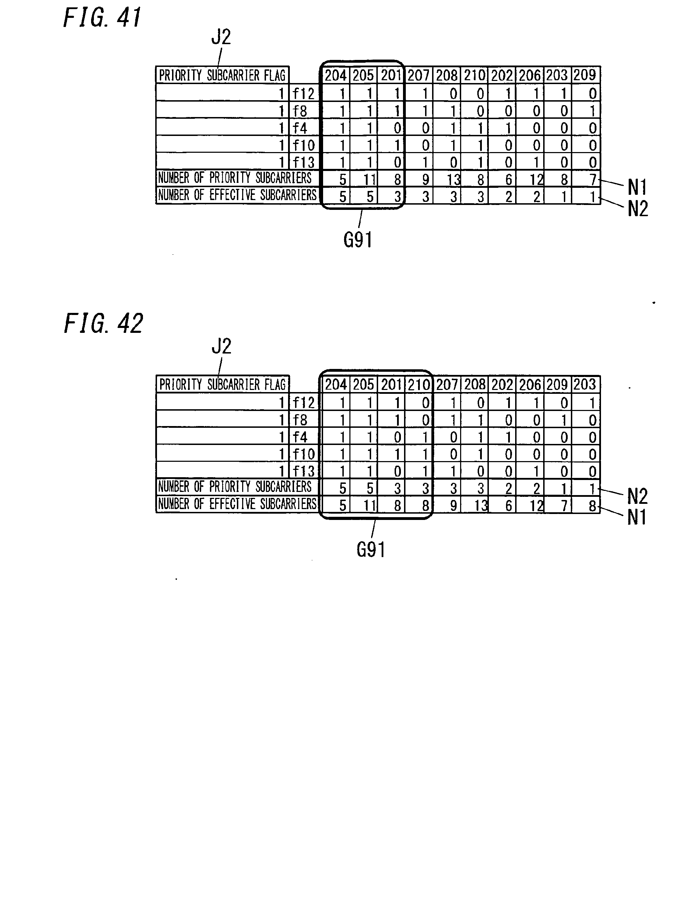

Alternatively, the data shown in FIG. 42 which is different from the data shown in FIG. 41 in that the boundary receiving nodes **201, 207, 208,** and **210** are rearranged in ascending order of the number **N1** of effective subcarriers may be used.

In this case, the node grouping unit **111** performs grouping of preferentially classifying the boundary receiving node having the less number **N1** of effective subcarriers out of the plural boundary receiving nodes **201, 207, 208,** and **210** into the destination group **G91.**

For example, first, the node grouping unit **111** classifies only the boundary receiving node **201** having the least number **N1** of effective subcarriers into the same destination group including the receiving nodes **204** and **205** having the number **N2** of priority subcarriers equal to "5". Note that, when the plural boundary receiving nodes having the same number **N1** of effective subcarriers and the same number **N2** of priority subcarriers exist, the grouping is performed with regard to the boundary receiving nodes **2** in ascending order of the identification number allocated thereto.

Next, the node grouping unit **111** classifies only the two boundary receiving nodes **201** and **210** having the less number **N1** of effective subcarriers into the same destination group including the receiving nodes **204** and **205** having the number **N2** of priority subcarriers equal to "5".

Next, the node grouping unit **111** classifies only the three boundary receiving nodes **201, 210,** and **207** having the less number **N1** of effective subcarriers into the same destination group including the receiving nodes **204** and **205** having the number N2 of priority subcarriers equal to **"5".**

Next, the node grouping unit **111** classifies all the boundary receiving nodes **201, 210, 207,** and **208** into the same destination group including the receiving nodes 204 and 205 having the number **N2** of priority subcarriers equal to "5".

In this manner, the grouping of preferentially classifying the boundary receiving node **2** having the less number **N1** of effective subcarriers out of the plural boundary receiving nodes **2** into the destination group may be performed.

Besides, combinations of the plural boundary receiving nodes **201, 207, 208,** and **210** are not limited to the aforementioned patterns. For example, any one of the boundary receiving nodes **201, 207, 208,** and **210** may be classified into the destination group **G91.** Further, any two of the boundary receiving nodes **201, 207, 208,** and **210** may be classified into the destination group **G91.** Furthermore, any three of the boundary receiving nodes **201, 207, 208,** and **210** may be classified into the destination group **G91.**

Moreover, the present embodiment is explained on the basis of the case where the grouping threshold is "3" and the boundary receiving node **2** has the number **N2** of priority subcarriers equal to 3. However, when the boundary receiving node **2** having the number **N2** of priority subcarriers equal to "3" does not exist, the receiving node having the number **N2** of priority subcarriers greater than "3" may be treated as the boundary receiving node **2.**

### (FIFTH EMBODIMENT)

The communication system of the present embodiment includes the same components as those of any one of the first to fourth embodiments, the same components are designated by the same reference numerals and explanations thereof are deemed unnecessary.

In each of the aforementioned embodiments, the grouping of the destination group by the node grouping unit **111** and the allocation of the shared subcarrier and the unshared subcarrier by the subcarrier selection unit **112** are performed prior to transmission of the simultaneous broadcast data for each of the modulation methods of BPSK, QPSK, 16QAM, 64QAM, and 256QAM. Consequently, the grouping and the allocation of the shared subcarrier and the unshared subcarrier which are associated with the modulation method corresponding to the highest communication rate out of BPSK, QPSK, 16QAM, 64QAM, and 256QAM are selected. Further, the modulation method selection unit 113 sets the modulation method corresponding to the highest communication rate to the sending unit **12.**

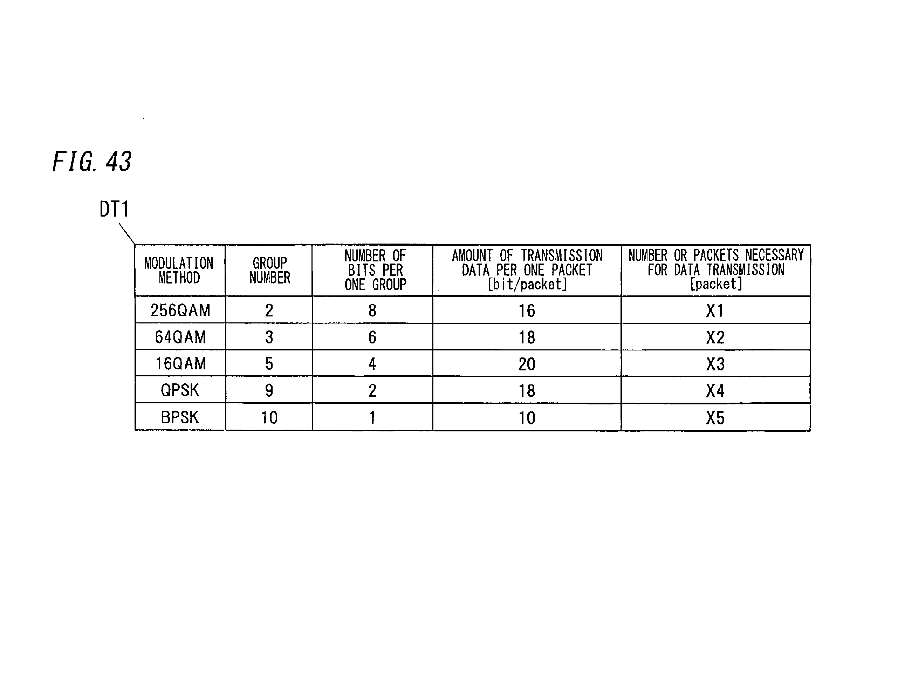

The following explanation referring to FIG. 43 is made to the selection process of the modulation method performed by the modulation method selection unit **113.**

FIG. 43 shows a data table DT1 indicative of a calculation result of the communication rate created by the sending period calculation unit 114 with regard to each of the modulation methods of BPSK, QPSK, 16QAM, 64QAM, and 256QAM. The data table **DT1** shows data of the number of destination groups, the number of bits of transmission data per one group, an amount of transmission data per one packet (bits/packet), the number of packets necessary for data transmission (packets), for each of the modulation methods of BPSK, QPSK, 16QAM, 64QAM, and 256QAM.

In this regard, the amount of transmission data per one packet is expressed as the product of the number of destination groups and the number of bits of transmission data per one group. Further, the number of packets necessary for data transmission is expressed as a value obtained by dividing the total number of bits of transmission data by the amount of transmission data per one packet. Note that, the numbers of packets necessary for data transmission of the modulation methods of BPSK, QPSK, 16QAM, 64QAM, and 256QAM are expressed as "X5", "X4", "X3", "X2", and **"X1",** respectively.

The modulation method selection unit **113** calculates the body sending period **Td** for the data body **Dp** for each destination group according to the number of packets necessary for data transmission, with regard to each modulation method. Next, to calculate the sending periods for the respective destination groups, the modulation method selection unit **113** adds the header sending period **Th** for the necessary header **Hp** to the body sending period **Td.** Further, to calculate the accumulated sending period, the modulation method selection unit **113** adds the gap period **Ti** to the sending periods for the respective destination groups. The modulation method selection unit **113** selects a combination of the modulation method corresponding to the shortest accumulated sending period calculated, the grouping of the destination group, and the allocation of the shared subcarrier and the unshared subcarrier, and set the selected combination to the sending unit **12.**

As mentioned above, in the communication system of the present embodiment, the sending node **101** includes the sending period calculation unit **114** and the modulation method selection unit **113.** The sending period calculation unit **114** calculates the sending period necessary for transmission of data. The modulation method selection unit **113** sets any one of the plural modulation methods in a switchable manner. The sending unit **12** sends data by use of the modulation method set by the modulation method selection unit **113.** The storage unit **14** stores the transmission path condition information **J1** with regard to situations of using the respective modulation methods. The node grouping unit **111** performs the grouping one or more times with regard to each modulation method while referring to the transmission path condition information **J1.** The sending period calculation unit **114** calculates the accumulated sending period defined as the sum of the sending periods for the simultaneous broadcast data of the respective destination groups, with regard to each of results obtained by performing the grouping for the respective modulation methods. The modulation method selection unit **113** and the sending period calculation unit **114** select from combinations of the modulation method and the result of the grouping a combination corresponding to the shortest accumulated sending period.

Especially, in the communication system of the present embodiment, with regard to each of the groups created through performing the grouping one or more times, the subcarrier selection unit **112** selects the shared subcarrier and the unshared subcarrier group used for communication with reference to the transmission path condition information. With regard to each of the groups created by performing the grouping for the respective modulation methods, the sending period calculation unit **114** calculates the carrier number defined as the sum of the number of shared subcarriers and the number of unshared subcarrier groups selected for the destination group, and calculates the sending period for the simultaneous broadcast data based on the calculated subcarrier number for each destination group, and calculates the accumulated sending period defined as the sum of the sending periods of the respective destination groups.

In other words, the sending node **2** further includes the sending period calculation unit **114** and the modulation method selection unit **113.** The sending unit 12 is configured to send the simultaneous broadcast data by using one of the plural modulation methods. The storage unit **14** is configured to store the transmission path condition information for each of the modulation methods. The node grouping unit **111** is configured to create the plural destination group sets by performing the plural grouping processes having the mutually different classification criteria, for each of the modulation methods, and select one from the plural destination group sets according to the predetermined condition. The sending period calculation unit **114** is configured to calculate the accumulated sending period necessary to send the simultaneous broadcast data to all of the receiving nodes **2,** for each of the destination group sets. The predetermined condition is that the accumulated sending period is the shortest. The modulation method selection unit **113** is configured to select the modulation method according to the destination group set selected by the node grouping unit **111.** The sending unit **12** is configured to send the simultaneous broadcast data by use of the modulation method selected by the modulation method selection unit **113.**

Especially, the subcarrier selection unit **112** is configured to create the subcarrier set for each of the destination groups with regard to each of the plural destination group sets created by the node grouping unit **111.** The sending period calculation unit **114** is configured to calculate the carrier number defined as the sum of the number of shared subcarriers and the number of unshared subcarrier sets included in the subcarrier set, for each of the destination group of the destination group set, and calculate the accumulated sending period based on the carrier number, for each of the destination group sets.

Further, in the communication system of the present embodiment, the sending period calculation unit **114** calculates the accumulated sending period by adding the interval period necessary to switch the destination group selected as the destination of the simultaneous broadcast data to the sum of the sending periods of the respective destination groups.

In other words, the sending unit **12** is configured to send the simultaneous broadcast data to the next destination group after a lapse of the predetermined interval period after (from the time of) sending the simultaneous broadcast data to the previous destination group. The sending period calculation unit **114** is configured to calculate the sending period necessary to send the simultaneous broadcast data to all of the receiving nodes **2** belonging to the destination group, for each of the destination groups of the destination group, and calculate the accumulated sending period of the destination group set by adding the sum of the sending periods of the respective plural destination groups of the destination group set to the total of the interval periods.

Consequently, with selecting the modulation method corresponding to the shortest accumulated sending period, the communication rate at the simultaneous broadcast can be more increased.

## Claims

1. A communication system comprising:
plural receiving nodes; and
a sending node configured to send simultaneous broadcast data to the plural receiving nodes,
wherein
the sending node comprises:
a sending unit configured to send the simultaneous broadcast data to the plural receiving nodes by use of at least one of plural subcarriers preliminarily prepared;
a storage unit configured to store transmission path condition information representing a condition of a transmission path for each of the receiving nodes;
a node grouping unit configured to perform a grouping process of referring to the transmission path condition information, and classifying the plural receiving nodes into plural destination groups based on a classification criterion related to the condition of the transmission path, and creating a destination group set defined by the plural destination groups; and
a subcarrier selection unit configured to refer to the transmission path condition information and select, from the plural subcarriers, a subcarrier or subcarriers to send the simultaneous broadcast data to the receiving node belonging to the destination group, for each of the destination groups of the destination group set, and
the sending unit is configured to send the simultaneous broadcast data to each of the plural destination groups of the destination group set by use of the subcarrier or subcarriers selected by the subcarrier selection unit in turn.

2. The communication system as set forth in claim 1, wherein
the condition of the transmission path indicates for each subcarrier whether or not the subcarrier is an effective subcarrier available for communication with the receiving node.

3. The communication system as set forth in claim 2, wherein
the node grouping unit is configured to, in the grouping process, perform:
a selection process of selecting the effective subcarrier of the receiving node having the least number of effective subcarriers, as a priority subcarrier;
a calculation process of calculating the number of priority subcarriers included in the effective subcarriers of the receiving node, for each receiving node;
a judgment process of judging whether or not the number of priority subcarriers is not less than a grouping threshold, for each receiving node; and
a classification process of classifying the receiving nodes having the number of priority subcarriers not less than the grouping threshold into the destination group which is different from the destination group including the receiving nodes having the number of priority subcarriers less than the grouping threshold.

4. The communication system as set forth in claim 3, wherein
the grouping threshold is a constant value.

5. The communication system as set forth in claim 3, wherein
the node grouping unit is configured to:
create the plural destination group sets by performing the plural grouping processes having the mutually different grouping thresholds; and
select one from the plural destination group sets according to a predetermined condition.

6. The communication system as set forth in any one of claims 3 to 5, wherein
the node grouping unit is configured to perform multiple separation processes defined by a combination of the selection process, the calculation process, the judgment process, and the classification process to create the destination group set defined by the three or more destination groups, and
the node grouping unit is configured to, in the classification process, create a first destination group with the number of priority subcarriers not less than the grouping threshold and a second destination group with the number of priority subcarriers less than the grouping threshold, and
the node grouping unit is configured to perform a first round of the separation processes with regard to all of the receiving nodes, and perform a second or subsequent rounds of the separation processes with regard to the second destination group created through the previous separation process.

7. The communication system as set forth in claim 2, wherein
the node grouping unit in configured to, in the grouping process, perform:
a selection process of selecting the effective subcarriers of the receiving node having the least number of effective subcarriers, as a priority subcarrier;
a calculation process of calculating the number of priority subcarriers included in the effective subcarriers of the receiving node, for each receiving node;
a judgment process of judging whether or not the number of priority subcarriers is not less than a grouping threshold, for each receiving node; and
a classification process in which the node grouping unit judges whether or not plural boundary receiving nodes each defined as the receiving node having the least number of priority subcarriers out of the receiving nodes having the number of priority subcarriers not less than the grouping threshold exist, and, upon concluding that the plural boundary receiving nodes exist, creates the plural destination group sets based on a combination of the plural boundary receiving nodes and the receiving node having the number of priority subcarriers greater than the number of priority subcarriers of the boundary receiving nodes.

8. The communication system as set forth in claim 7, wherein
the node grouping unit is configured to, in the classification process, classify the boundary receiving node(s) having the less number of effective subcarriers out of the plural boundary receiving nodes into the same destination group that includes the receiving nodes having the number of priority subcarriers greater than that of the boundary receiving node, in priority to the boundary receiving nodes having the greater number of effective subcarriers.

9. The communication system as set forth in claim 2, wherein
the subcarrier selection unit is configured to classify the plural subcarriers into shared subcarriers and unshared subcarriers, for each of the destination groups of the destination group set, and
the shared subcarrier is defined as subcarriers serving as the effective subcarrier to all of the receiving nodes included in the destination group, and
the unshared subcarrier is defined as the subcarrier serving as the effective subcarrier to not all but at least one of the receiving nodes included in the destination group, and
the subcarrier selection unit is configured to create a subcarrier set for each of the destination groups of the destination group set, and
the subcarrier set includes at least one of the shared subcarrier and an unshared subcarrier set, and the unshared subcarrier set is defined as a group of the plural unshared subcarriers selected so as to allow all of the receiving nodes belonging to the destination group to receive the simultaneous broadcast data, and
the sending unit is configured to send the simultaneous broadcast data by use of the subcarrier set created by the subcarrier selection unit, for each of the destination groups of the destination group set.

10. The communication system as set forth in claim 2, wherein
the sending node further includes a sending period calculation unit, and
the node grouping unit is configured to:
create the plural destination group sets by performing the plural grouping processes having the mutually different classification criteria; and
select one from the plural destination group sets according to a predetermined condition, and
the sending period calculation unit is configured to calculate an accumulated sending period necessary to send the simultaneous broadcast data to all of the receiving nodes, for each of the destination group sets, and
the predetermined condition is that the accumulated sending period is the shortest.

11. The communication system as set forth in claim 9, wherein
the sending node further includes a sending period calculation unit, and
the node grouping unit is configured to:
create the plural destination group sets by performing the plural grouping processes having the mutually different classification criteria; and
select one from the plural destination group sets according to a predetermined condition, and
the subcarrier selection unit is configured to create the subcarrier set for each of the destination groups with regard to each of the plural destination group sets created by the node grouping unit, and
the sending period calculation unit is configured to:
calculate a carrier number defined as the sum of the number of shared subcarriers and the number of unshared subcarrier sets with regard to the subcarrier set, for each of the destination group; and
calculate an accumulated sending period based on the carrier number, for each of the destination group sets, and
the accumulated sending period is defined as the time necessary to send the simultaneous broadcast data to all of the receiving nodes, and
the predetermined condition is that the accumulated sending period is the shortest.

12. The communication system as set forth in claim 1, wherein
the sending node further includes a sending period calculation unit and a modulation method selection unit, and
the sending unit is configured to send the simultaneous broadcast data by using one of the plural modulation methods, and
the storage unit is configured to store the transmission path condition information for each of the modulation methods, and
the node grouping unit is configured to:
create the plural destination group sets by performing the plural grouping processes having the mutually different classification criteria, for each of the modulation methods; and
select one from the plural destination group sets according to a predetermined condition, and
the sending period calculation unit is configured to calculate an accumulated sending period necessary to send the simultaneous broadcast data to all of the receiving nodes, for each of the destination group sets, and
the predetermined condition is that the accumulated sending period is the shortest, and
the modulation method selection unit is configured to select the modulation method according to the destination group set selected by the node grouping unit; and
the sending unit is configured to send the simultaneous broadcast data by use of the modulation method selected by the modulation method selection unit.

13. The communication system as set forth in claim 9, wherein
the sending node further includes a sending period calculation unit and a modulation method selection unit, and
the sending unit is configured to send the simultaneous broadcast data by using one selected from plural modulation methods, and
the storage unit is configured to store the transmission path condition information for each of the modulation methods, and
the node grouping unit is configured to:
create the plural destination group sets by performing the plural grouping processes having the mutually different classification criteria, for each of the modulation methods; and
select one from the plural destination group sets according to a predetermined condition, and
the subcarrier selection unit is configured to create the subcarrier set for each of the destination groups with regard to each of the plural destination group sets created by the node grouping unit, and
the sending period calculation unit is configured to:
calculate a carrier number defined as the sum of the number of shared subcarriers and the number of unshared subcarrier sets included in the subcarrier set, for each of the destination group of the destination group set; and
calculate an accumulated sending period based on the carrier number, for each of the destination group sets, and
the accumulated sending period is defined as the time necessary to send the simultaneous broadcast data to all of the receiving nodes, and
the predetermined condition is that the accumulated sending period is the shortest.
the modulation method selection unit is configured to select the modulation method according to the destination group set selected by the node grouping unit; and
the sending unit is configured to send the simultaneous broadcast data by use of the modulation method selected by the modulation method selection unit.

14. The communication system as set forth in claim 11 or 13, wherein
the sending unit is configured to send a simultaneous broadcast data to the next destination group after a lapse of a predetermined interval period after sending the simultaneous broadcast data to the previous destination group, and the sending period calculation unit is configured to:
calculate a sending period necessary to send the simultaneous broadcast data to all of the receiving nodes belonging to the destination group, for each of the destination groups of the destination group; and
calculate the accumulated sending period of the destination group set by adding the sum of the sending periods of the respective plural destination groups of the destination group set to the total of the interval periods.

15. The communication system as set forth in claim 1, wherein:
the sending unit is configured to send destination group information together with the simultaneous broadcast data; and
the destination group information includes destination information indicative of the destination group selected as a destination of the simultaneous broadcast data; and
the receiving node is configured to, upon receiving the simultaneous broadcast data and the destination group information, judge whether or not the receiving node belongs to the destination group indicated by the destination information included in the received destination group information, and to, upon concluding that the receiving node belongs to the destination group indicated by the destination information, accept the simultaneous broadcast data, and to, upon concluding that the receiving node does not belong to the destination group indicated by the destination information, discard the simultaneous broadcast data.
